(19) **Europäisches Patentamt** / **European Patent Office** / **Office européen des brevets**

(11) **EP 2 917 286 B1**

(12) # EUROPÄISCHE PATENTSCHRIFT

(45) Veröffentlichungstag und Bekanntmachung des Hinweises auf die Patenterteilung:
**04.01.2017 Patentblatt 2017/01**

(21) Anmeldenummer: **13788952.3**

(22) Anmeldetag: **05.11.2013**

(51) Int Cl.:
*C09C 1/00* (2006.01)  *B01J 21/06* (2006.01)
*B01J 21/08* (2006.01)  *B01J 23/06* (2006.01)
*B01J 23/10* (2006.01)  *B01J 23/14* (2006.01)
*B01J 35/00* (2006.01)  *B01J 35/08* (2006.01)
*B01J 35/10* (2006.01)  *B01J 37/02* (2006.01)
*B01J 37/03* (2006.01)  *C09C 1/30* (2006.01)
*C09C 3/06* (2006.01)

(86) Internationale Anmeldenummer:
**PCT/EP2013/073048**

(87) Internationale Veröffentlichungsnummer:
**WO 2014/072287 (15.05.2014 Gazette 2014/20)**

(54) **PIGMENT MIT PHOTOKATALYTISCHER AKTIVITÄT, VERFAHREN ZU DESSEN HERSTELLUNG UND BESCHICHTUNGSMITTEL**

PIGMENT WITH PHOTOCATALYTIC ACTIVITY, PROCESS FOR ITS PREPARATION AND COATING AGENT

PIGMENT À ACTIVITÉ PHOTOCATALYTIQUE, SON PROCÉDÉ DE FABRICATION ET MOYEN DE REVÊTEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.11.2012 EP 12191492**

(43) Veröffentlichungstag der Anmeldung:
**16.09.2015 Patentblatt 2015/38**

(73) Patentinhaber: **Eckart GmbH**
**91235 Hartenstein (DE)**

(72) Erfinder:
• **GRÜNER, Michael**
**91275 Auerbach (DE)**

• **KAUPP, Günter**
**91284 Neuhaus (DE)**

(74) Vertreter: **Louis Pöhlau Lohrentz**
**Patentanwälte**
**Postfach 30 55**
**90014 Nürnberg (DE)**

(56) Entgegenhaltungen:
**EP-B1- 1 980 594**  **WO-A2-03/006558**
**WO-A2-2011/095447**  **DE-A1-102006 044 076**
**US-A1- 2010 075 031**  **US-A1- 2010 322 981**

**Beschreibung**

Die vorliegende Erfindung betrifft Pigmente mit photokatalytischer Aktivität, Verfahren zu deren Herstellung und Beschichtungsmittel.

Photokatalytische Selbstreinigung bezeichnet eine Eigenschaft von Oberflächen, die z. B. mit Nanopartikeln aus Titandioxid ($TiO_2$) beschichtet wurden. Durch Bestrahlung mit (Sonnen-) Licht werden organische Materialien auf der Oberfläche zersetzt. Die Oberflächen bleiben sauber und wirken antimikrobiell.

Die Grundlage des photokatalytischen Effektes ist in den Halbleitereigenschaften von Titandioxid ($TiO_2$) begründet. Beim Auftreffen von Licht erzeugt dieses Elektronen-Loch-Paare, vorausgesetzt die Energie der Photonen ist größer als die Bandlücke Eg (innerer photoelektrischer Effekt).
Die Elektronen oder Löcher können im Titandioxid an die Oberfläche diffundieren und erzeugen dort Radikale, die zur Zersetzung organischer Substanzen führen. Insbesondere die Löcher haben eine hohe oxidative Wirkung, z. B. können auf diese Weise sogar aus Wasser OH-Radikale gebildet werden. Organische Substanzen werden durch die gebildeten Radikale zersetzt; Endprodukte sind in vielen Fällen $CO_2$ und Wasser.

Als Anwendungsgebiete dieses photokatalytischen Effektes werden bisher selbstreinigende Oberflächen, z. B. auf KFZ-Rückspiegeln, selbstreinigende bzw. antimikrobiell wirkende Kacheln, sowie photokatalytisch wirkende Dispersionsfarben, Pflastersteine, Fliesen, Sichtbeton, Dachziegel, Papiere, sowie Wasseraufbereitung und Luftreinigung beschrieben.

Im Stand der Technik werden zur Photokatalyse hauptsächlich $TiO_2$-Partikel verschiedenster Feinheiten und insbesondere Nanopartikel basierend auf Basis von Anatas-$TiO_2$ beschrieben. Zum anderen werden auch mit $TiO_2$ (Anatas) belegte Perlglanzpigmente erwähnt. WO 2008/034510 A2 betrifft eine photokatalytisch aktive Beschichtung für Oberflächen, die als photokatalytisch aktives Material handelsübliche Interferenzpigmente enthält.

Werden $TiO_2$-Nanopartikel als photokatalytisch aktives Material eingesetzt, sind auch die damit einhergehenden möglichen Gefahren für Hersteller und Anwender nicht zu unterschätzen. Es ist bekannt, dass nanopartikuläres Titandioxid sowohl über die Lungen als auch über die Haut oder den Verdauungstrakt vom Menschen aufgenommen werden und dort zu Anreicherungen führen kann. Bei der Anwendung insbesondere auf den Außenflächen von Bauteilen aller Art ist auch der Übergang von beträchtlichen Mengen an Nanopartikeln in das Grundwasser nicht auszuschließen.

Bei der Verwendung von $TiO_2$-Partikel oder $TiO_2$-Nanopartikeln kann es zu unerwünschten Farberscheinungen, wie z. B. Trübung, Streuung oder Weißfärbung, kommen.
Bei der Verwendung von handelsüblichen Perlglanzpigmenten ist zudem sehr häufig ein signifikanter Glanzeffekt zu beobachten. Ebenso erzeugen handelsübliche Perlglanzpigmente abhängig vom $TiO_2$-Anteil der Beschichtung einen Farbeffekt, so genannte Interferenzfarben.

Einen signifikanten Nachteil von $TiO_2$-Partikeln stellt die Problematik dar, dass die beabsichtigte Photoaktivität und die damit einhergehende Radikalbildungstendenz des Titandioxids nicht zwischen "Freund" und "Feind" unterscheiden kann. Die $TiO_2$-Partikel können nicht differenzieren, ob organische Komponenten in deren Umgebung nun abgebaut oder erhalten werden sollen. D. h., in aller Regel werden auch organische Bindemittelsysteme, die als Matrix oder Träger für photokatalytisch aktive $TiO_2$-Partikel in Frage kommen, radikalisch abgebaut. Dieser Effekt ist natürlich nicht erwünscht, da dann eine erzielbare Wirkung nur kurzzeitig verfügbar wäre. Daher sind aktuell die meisten Beschichtungen mit photokatalytischer Aktivität auf unempfindliche, anorganische Bindemittelmatrices beschränkt, oder nur für einen kurzen Zeitraum wirksam. Makroskopisch äußert sich dies beispielsweise in einer starken Kreidung und macht die Verwendung organischer Bindemittel derzeit nahezu unmöglich.

Die DE 10 2006 044 076 A1 offenbart eine photokatalytisch aktive Beschichtung.
Die US 2010/0322981 A1 offenbart farbstarke Pigmente mit Farbflop.
Die WO 2011/095447 A2 offenbart Pigmente mit verstärktem Glitzereffekt.
Aufgabe der vorliegenden Erfindung ist die Bereitstellung eines Pigments mit photokatalytischer Aktivität, das universell in allen gängigen Anwendungssystemen, also auch in organischen Bindemittelsystemen, eingesetzt werden kann. Insbesondere soll das organische Bindemittelsystem, enthaltend das neuartige Pigment mit photokatalytischer Aktivität auch über einen langen Zeitraum beständig sein, ohne einen signifikanten schädlichen Abbau zu erfahren, und insbesondere ohne dass sich besagter Bindemittelfilm und/oder das Pigment mit photokatalytischer Aktivität aufgrund einer Bindemitteldegradation von den beschichteten Oberflächen löst, und damit die photokatalytisch aktive Beschichtung unwirksam wird.

Weiterhin sollen die Pigmente mit photokatalytischer Aktivität möglichst nicht sichtbar in Erscheinung treten, so dass kein oder nur ein geringer Einfluss auf die beschichteten Oberflächen erfolgt.

Im Hinblick auf die Vermeidung von Gesundheits- und Sicherheitsrisiken für Hersteller, Anwender und Nutzer sollen die Pigmente mit photokatalytischer Aktivität nicht nanopartikulär sein.

Die Aufgabe wurde gelöst durch Bereitstellung von Pigmenten mit nichtmetallischem Substrat gemäß Anspruch 1.

Bevorzugte Weiterbildungen sind in den Unteransprüchen 2 bis 14 angegeben.

Des Weiteren wurde die Aufgabe gelöst durch Bereitstellung eines Verfahrens zum Herstellen von erfindungsgemäßen Pigmenten, wobei das Verfahren folgende Schritte umfasst,

(a) Beschichten eines nichtmetallischen Substrates mit wenigstens einer Barriereschicht,

(b) Beschichten des mit wenigstens einer Barriereschicht versehenen nichtmetallischen Substrates mit wenigstens einer photokatalytisch aktiven Schicht.

Weiterhin wird die Aufgabe gelöst durch Verwendung der erfindungsgemäßen Pigmente in einem Beschichtungsmittel, vorzugsweise einem Lack oder einer Farbe. Die erfindungsgemäßen Pigmente eignen sich mithin zur erfindungsgemäßen Verwendung in einem Beschichtungsmittel, wie beispielsweise einem Lack, insbesondere einem Holzschutzlack, einer Farbe oder einer Lasur.

Unter dem Begriff "Pigmente" oder "Pigment" wird erfindungsgemäß eine Mehrzahl an Pigmenten verstanden.

Unter dem Begriff "selektiv Licht absorbierend" wird erfindungsgemäß verstanden, dass die Absorption nicht über das gesamte Lichtspektrum bzw. Wellenlängenspektrum erfolgt, sondern lediglich ein Teil des Spektrums absorbiert wird. Beispielsweise wird unter "selektiv Licht absorbierend" gemäß einer Variante der Erfindung verstanden, dass lediglich UV-Licht absorbiert wird. Das selektiv absorbierte Licht induziert erfindungsgemäß vorzugsweise die photokatalytische Aktivität der photokatalytisch aktiven Schicht.

Gegenstand der Erfindung ist vorzugsweise ein Lack, insbesondere ein Holzschutzlack, welcher die erfindungsgemäßen Pigmente umfasst.

Die nichtmetallischen Substrate der erfindungsgemäßen Pigmente sind vorzugsweise transparent, d.h. für sichtbares Licht durchlässig, sowie vorzugsweise weitgehend frei von färbenden Komponenten, welche die Helligkeit $L^*$ herabsetzen und/oder einen Farbton verändern können.

Der Gehalt an Eisen oder Eisenverbindungen der nichtmetallischen Substrate, berechnet als elementares Eisen, liegt vorzugsweise bei weniger als 1,50 Gew.-%, bevorzugt in einem Bereich von 0,01 Gew.-% bis 0,74 Gew.-%, weiter bevorzugt in einem Bereich von 0,03 Gew.-% bis 0,36 Gew.-% und besonders bevorzugt in einem Bereich von 0,01 Gew.-% bis 0,18 Gew.-%, jeweils bezogen auf das Gesamtgewicht des Substrats.

Bevorzugt wird der Eisengehalt der nichtmetallischen Substrate über Röntgenfluoreszenzanalyse (RFA) bestimmt. Hierzu werden die Substrate mit Lithiumtetraborat versetzt, in oxidierender Atmosphäre geschmolzen und als homogene Glastablette vermessen. Als Messgerät wird das Gerät Advantix ARL, Fa. Thermo Scientific, verwendet.

Die nichtmetallischen Substrate können in plättchenförmiger oder sphärischer Form vorliegen, bevorzugt sind die nichtmetallischen Substrate plättchenförmig.

Die nichtmetallischen plättchenförmigen Substrate können aus der Gruppe, bestehend aus natürlichen Glimmerplättchen, synthetischen Glimmerplättchen, Glasplättchen, Aluminiumoxidplättchen, Siliziumdioxidplättchen und deren Gemische, ausgewählt werden. Bevorzugt werden die nichtmetallischen plättchenförmigen Substrate aus der Gruppe, bestehend aus natürlichen Glimmerplättchen, synthetischen Glimmerplättchen, Glasplättchen und deren Gemische, ausgewählt. Besonders bevorzugt werden die nichtmetallischen plättchenförmigen Substrate aus der Gruppe, bestehend aus synthetischen Glimmerplättchen, Glasplättchen und deren Gemische ausgewählt. Ganz besonders bevorzugt sind als Substrat synthetische Glimmerplättchen.

Sollen synthetische Glimmerplättchen als Substrat eingesetzt werden, so handelt es sich im Rahmen dieser Erfindung vorzugsweise um Fluorphlogopit der allgemeinen Formel $KMg_3AlSi_3O_{10}F_2$. Bei einer bevorzugten Ausführungsform werden synthetische Glimmerplättchen eingesetzt, welche gemäß Röntgenfluoreszenzanalyse Siliziumdioxid in einem Anteil aus einem Bereich von 38 bis 46 Gew.-%, Aluminiumoxid aus einem Bereich von 10 bis 14 Gew.-%, Kaliumoxid aus einem Bereich von 9 bis 13 Gew.-%, Natriumoxid aus einem Bereich von 0 bis 13 Gew.-%, Eisen(III)oxid aus einem Bereich von 0,01 bis 0,25 Gew.-%, Magnesiumoxid aus einem Bereich von 26 bis 34 Gew.-%, bevorzugt aus einem Bereich von 10 bis 30 Gew.-%, besonders bevorzugt aus einem Bereich von 13 bis 27 Gew.-%, ganz besonders bevorzugt aus einem Bereich von 17 bis 23 Gew.-%, Mangan(II)oxid aus einem Bereich von 0 bis 0,05 Gew.-%, jeweils bezogen auf das Gesamtgewicht der synthetischen Glimmerplättchen, enthalten.

Der Gehalt an färbenden Ionen von beispielsweise Nickel-, Chrom-, Kupfer-, Mangan- und/oder Antimonionen, berechnet jeweils als elementares Metall, liegt in den synthetischen Glimmerplättchen jeweils vorzugsweise bei weniger als 15 ppm, weiter bevorzugt jeweils bei weniger als 10 ppm, jeweils bezogen auf das Gesamtgewicht des Substrates.

Sollen Glasplättchen als Substrat eingesetzt werden, kann dieses vorzugsweise eine Zusammensetzung aufweisen, welche A-, C-, ECR-, LAG-, Duran-, Quarz-, E-Glas sowie optisches Glas, Fensterglas oder Laborglas entspricht.

Der Brechungsindex der Glasflakes liegt in einem Bereich von 1,3 bis 2,9, bevorzugt in einem Bereich von 1,35 bis 2,3 und besonders bevorzugt in einem Bereich von 1,4 bis 1,8. Bevorzugt weisen die Glasplättchen die in EP 1 980 594 B1 beanspruchte Zusammensetzung auf. Sie können nach dem in EP 0 289 240 B1, WO 2004/056716 A1 und WO 2005/063637 A1 beschriebenen Verfahren hergestellt werden.

Die mittlere Teilchengröße $D_{50}$ der nichtmetallischen plättchenförmigen Substrate liegt bevorzugt in einem Bereich von 2 bis 65 μm, besonders bevorzugt in einem Bereich von 3 bis 50 μm und ganz besonders bevorzugt in einem Bereich von 5 bis 40 $\mu$m.

Die mittlere Dicke $h_{50}$ des nichtmetallischen plättchenförmigen Substrats liegt brei $\leq$ 5 $\mu$m, bevorzugt in einem Bereich von 50 bis 5000 nm, weiter bevorzugt von 50 bis 1500 nm, besonders bevorzugt in einem Bereich von 80 bis 1300 nm, weiter bevorzugt in einem Bereich von 95 bis 1200 nm, noch weiter bevorzugt von 100 bis 1000 nm, noch weiter bevorzugt von 150 bis 750 nm.

Werden synthetische Glimmerplättchen als nichtmetallisches plättchenförmiges Substrat eingesetzt, so liegt deren mittlere Dicke $h_{50}$ bevorzugt in einem Bereich von 60 bis 1200 nm, weiter bevorzugt in einem Bereich von 80 bis 990 nm, besonders bevorzugt in einem Bereich von 90 bis 600 nm und ganz besonders bevorzugt in einem Bereich von 95 bis 400 nm.

Werden Glasplättchen als nichtmetallisches plättchenförmiges Substrat eingesetzt, so liegt deren mittlere Dicke $h_{50}$ bevorzugt in einem Bereich von 50 bis 5000 nm, weiter bevorzugt in einem Bereich von 100 bis 2500 nm und besonders bevorzugt in einem Bereich von 800 bis 1300 nm. Weitere Vorteile bieten dünnere Glasplättchen. Dünnere Substrate führen zu einer geringeren Gesamtschichtdicke der erfindungsgemäßen Pigmente. So sind ebenfalls bevorzugt Glasplättchen, deren mittlere Dicke $h_{50}$ in einem Bereich von 70 nm bis 700 nm, weiter bevorzugt in einem Bereich von 120 nm bis 600 nm, besonders bevorzugt in einem Bereich von 170 nm bis 500 nm und ganz besonders bevorzugt in einem Bereich 200 nm bis 400 nm liegt.

Werden nichtmetallische plättchenförmige Substrate unterhalb einer mittleren Dicke $h_{50}$ von 50 nm mit beispielsweise hochbrechenden Metalloxiden beschichtet, so werden extrem bruchempfindliche Pigmente erhalten, die schon beim Einarbeiten in ein Anwendungsmedium zerbrechen können, was wiederum eine signifikante Herabsetzung des Glanzes bedingt. Zudem dauern die Beschichtungszeiten dieser dünnen Substrate mit beispielsweise hochbrechenden Metalloxiden aufgrund der hohen spezifischen Oberflächen, d.h. der Oberfläche pro Gewichtseinheit Pigment, dieser plättchenförmigen Substrate sehr lange, wodurch hohe Herstellkosten verursacht werden. Oberhalb einer mittleren Substratdicke $h_{50}$ von 5000 nm nimmt das Aspektverhältnis, d.h. das Verhältnis von Durchmesser zur Dicke, der Pigmente deutlich ab. Damit einhergehend nimmt auch die Anzahl der Pigmente pro Gramm Pigmentgewicht signifikant ab. Damit verbunden ist eine schlechtere spezifische Deckfähigkeit, d.h. abgedeckte Fläche pro Gewichtseinheit an erfindungsgemäßem Pigment, sowie eine geringere planparallele Orientierung der Pigmente, d.h. Orientierung der plättchenförmigen Pigmentoberfläche im Wesentlichen parallel zur Oberfläche des zu beschichtenden Untergrundes, in einem Anwendungsmedium. Daraus resultierend würde eine photokatalytische Aktivität nur partiell innerhalb einer geschlossenen Beschichtung wirken, was sich in einer uneinheitlichen und nicht ausreichenden Selbstreinigung der Oberfläche äußert.

Die mittlere Dicke $h_{50}$ des nichtmetallischen plättchenförmigen Substrats wird anhand von rasterelektronenmikroskopischen Querschliffaufnahmen der erfindungsgemäßen Pigmente bestimmt. Der Querschliff eines gehärteten Lackfilms, in dem die erfindungsgemäßen Pigmente parallel zum Untergrund ausgerichtet sind, wird mit einem Rasterelektronenmikroskop, vorzugsweise dem Gerät Supra 35, Fa. Zeiss, untersucht, wobei die Dicke des nichtmetallischen plättchenförmigen Substrates von mindestens 100 Pigmenten bestimmt und anschließend statistisch gemittelt wird.

Die nichtmetallischen sphärischen Substrate werden vorzugsweise aus der Gruppe, bestehend aus $SiO_2$-Kugeln, Glaskugeln, Glashohlkugeln, wie beispielsweise Hollow Glass Microspheres (beispielsweise Natriumsilikat, CAS Nr. 1344-09-8, Natriumborat CAS Nr. 7775-19-1, amorphes Siliziumdioxid CAS Nr. 7631-86-9; Fa. Cospheric) oder MikroGlashohlkugeln S32, Fa. 3M, PMMA Kugeln, PE Kugeln (PE: Polyethylen) und Mischungen davon, ausgewählt. Besonders bevorzugt sind Glashohlkugeln.

Die mittlere Teilchengröße $D_{50}$ der nichtmetallischen sphärischen Substrate liegt vorzugsweise in einem Bereich von 5 bis 100 $\mu$m, weiter bevorzugt in einem Bereich von 15 bis 75 $\mu$m und besonders bevorzugt in einem Bereich von 25 bis 65 $\mu$m.

Die durchschnittliche Dichte der nichtmetallischen sphärischen Substrate liegt in einem Bereich von 0,08 bis 1,0 g/cm$^3$, bevorzugt in einem Bereich von 0,1 bis 0,75 g/cm$^3$. Dabei wird die Dichte über ein Gaspyknometer, wie beispielsweise über ein Pentapyknometer 5200et der Fa. Quantachrome, bestimmt.

Die mittlere Teilchengröße $D_{50}$ der erfindungsgemäßen plättchenförmigen Pigmente liegt bevorzugt in einem Bereich von 2 bis 65 $\mu$m, weiter bevorzugt in einem Bereich von 3 bis 50 $\mu$m, besonders bevorzugt in einem Bereich von 4 bis 45 $\mu$m und ganz besonders bevorzugt in einem Bereich von 5 bis 39 $\mu$m.

Die mittlere Teilchengröße $D_{50}$ der erfindungsgemäßen sphärischen Pigmente liegt bevorzugt in einem Bereich von 5 bis 100 $\mu$m, weiter bevorzugt in einem Bereich von 15 bis 75 $\mu$m, und besonders bevorzugt in einem Bereich von 19 bis 45 $\mu$m.

Die mittlere Teilchengröße $D_{50}$ der nichtmetallischen plättchenförmigen Substrate, der nichtmetallischen sphärischen Substrate sowie der erfindungsgemäßen Pigmente steht für die Summenhäufigkeitsverteilung der volumengemittelten Größenverteilungsfunktion, wie sie durch Laserbeugungsmethoden erhalten wird, und gibt an, dass 50 % der Substrate bzw. Pigmente einen Durchmesser aufweisen, der gleich oder kleiner als der jeweils angegebene Wert ist. Sie wird mit einem Gerät der Fa. Malvern (Gerät: MALVERN Mastersizer 2000) gemäß Herstellerangaben bestimmt. Die Auswertung der Streulichtsignale erfolgt dabei nach der Fraunhofer Methode.

**EP 2 917 286 B1**

Die mittlere Teilchengröße $D_{50}$ der unbeschichteten Substrate und der beschichteten Substrate unterscheiden sich nur unwesentlich. Die Beschichtung trägt mithin nicht wesentlich zur mittleren Teilchengröße bei.

Erfindungsgemäß weist die Barriereschicht Metalloxid, Metallhydroxid und/oder Metalloxidhydrat auf oder besteht daraus, wobei das Metall aus der Gruppe, die aus Cer, Zink und Mischungen davon besteht, ausgewählt wird.

Zur Herstellung der erfindungsgemäßen Pigmente wird das nichtmetallische Substrat mithin mit einer Barriereschicht aus oder mit Metalloxid(en), -hydroxid(en) und/oder Metalloxidhydrat(en) von Cer und/oder Zink beschichtet.

Bei einer bevorzugten Ausführungsform umfasst oder besteht diese Barriereschicht aus Metalloxid(en), -hydroxid(en) und/oder Metalloxidhydrat(en) von Cer.

Bei einer weiteren Ausführungsform umfasst oder besteht die Barriereschicht aus Metalloxid(en), - hydroxid(en) und/oder Metalloxidhydrat(en) von Zink oder aus Metalloxid(en), -hydroxid(en) und/oder Metalloxidhydrat(en) von Cer und Zink. Im letzteren Fall können die Metalloxide, -hydroxide und/oder Metalloxidhydrate von oder aus Cer und Zink als Mischschicht oder als zwei voneinander getrennte Schichten innerhalb der

Barriereschicht vorliegen. Liegen die Metalloxid, -hydroxid und/oder Metalloxidhydratschicht von oder aus Cer und Zink separat voneinander vor, so wird vorzugsweise zunächst eine Schicht aus Metalloxid, -hydroxid und/oder Metalloxidhydrat von Zink und im Anschluss eine Schicht aus Metalloxid, -hydroxid und/oder Metalloxidhydrat von Cer auf das zu beschichtende Substrat aufgebracht.

Gemäß einer bevorzugten Weiterbildung der Erfindung weist die Barriereschicht einen Gewichtsanteil aus einem Bereich von 0,1 bis weniger als 5 Gew.-%, bezogen auf das Gesamtgewicht der Pigmente, auf.

Der Gesamtgehalt an Metalloxid(en), -hydroxid(en) und/oder Metalloxidhydrat(en) von oder aus Cer und/oder Zink liegt vorzugsweise in einem Bereich von 0,1 bis weniger als 5 Gew.-%, weiter bevorzugt bei < 3 Gew.-%, noch weiter bevorzugt in einem Bereich von 0,1 bis 2,5 Gew.-%, besonders bevorzugt in einem Bereich von 0,2 bis 2,0 Gew.-% und ganz besonders bevorzugt in einem Bereich von 0,3 bis 1,5 Gew.-%, jeweils bezogen auf das Gesamtgewicht des erfindungsgemäßen Pigments.

Gemäß einer weiteren bevorzugten Ausführungsform der Erfindung ist zwischen der wenigstens einen Barriereschicht und der wenigstens einen photokatalytisch aktiven Schicht wenigstens eine weitere anorganische Schicht angeordnet. Diese wenigstens eine weitere anorganische Schicht ist vorzugsweise photokatalytisch inaktiv. Bevorzugt ist, dass die wenigstens eine weitere anorganische Schicht einen Gewichtsanteil aus einem Bereich von 0,1 bis weniger als 10 Gew.-%, bevorzugt aus einem Bereich von 0,1 bis 8,0 Gew.-%, besonders bevorzugt aus einem Bereich von 0,2 bis 5,0 Gew.-% und ganz besonders bevorzugt aus einem Bereich von 0,3 bis 3,0 Gew.-%, jeweils bezogen auf das Gesamtgewicht der Pigmente, aufweist.

Auf die Barriereschicht mit oder aus Metalloxid(en), -hydroxid(en) und/oder Metalloxidhydrat(en) von Cer und/oder Zink wird bei einer weiteren Ausführungsform der Erfindung vorzugsweise eine zweite Schicht aus, vorzugsweise photokatalytisch inaktivem(n), Metalloxid(en), - hydroxid(en) und/oder Metalloxidhydrat(en), vorzugsweise mit oder aus Silizium, Zirkonium, Zinn und/oder Aluminium aufgebracht. Der Gesamtgehalt an Metalloxid(en), -hydroxid(en) und/oder Metalloxidhydrat(en) dieser zweiten Schicht liegt vorzugsweise bei < 10 Gew.-%, bevorzugt in einem Bereich von 0,1 bis 8,0 Gew.-%, besonders bevorzugt in einem Bereich von 0,2 bis 5,0 Gew.-% und ganz besonders bevorzugt in einem Bereich von 0,3 bis 3,0 Gew.-%, jeweils bezogen auf das Gesamtgewicht des erfindungsgemäßen Pigments.

Bei einer bevorzugten Ausführungsform umfasst oder besteht die zweite Schicht aus Metalloxid(en), -hydroxid(en) und/oder Metalloxidhydrat(en) von Silizium und/oder Zinn, ganz besonders bevorzugt aus Metalloxid(en), -hydroxid(en) und/oder Metalloxidhydrat(en) von Silizium.

Gemäß einer weiteren bevorzugten Ausführungsform der Erfindung ist die wenigstens eine photokatalytisch aktive Schicht die äußerste anorganische Schicht. Bei der äußersten anorganischen Schicht handelt es sich mithin um die außenliegende anorganische Schicht der erfindungsgemäßen Pigmente.

Diese außenliegende photokatalytisch aktive anorganische Schicht mit oder aus Titanoxid, Titanhydroxid und/oder Titanoxidhydrat kann organisch-chemisch oberflächenmodifiziert sein. Über die organisch-chemische Oberflächenmodifizierung kann beispielsweise eine chemische Anbindung, beispielsweise unter Ausbildung kovalenter Bindungen, an eine die Pigmente umgebende Bindemittelmatrix möglich sein. Auch kann durch die organisch-chemische Oberflächenmodifizierung das Leafing-Verhalten der erfindungsgemäßen, insbesondere der plättchenförmigen Pigmente, beeinflusst und eingestellt werden.

Der Anteil der photokatalytisch aktiven Schicht liegt vorzugsweise in einem Bereich von 2 bis weniger als 30 Gew.-%, bevorzugt in einem Bereich von 3 bis 28 Gew.-%, besonders bevorzugt in einem Bereich von 4 bis 26 Gew.-% und ganz besonders bevorzugt in einem Bereich von 5 bis 23 Gew.-%, jeweils bezogen auf das Gesamtgewicht des erfindungsgemäßen Pigments.

Gemäß einer weiteren bevorzugten Ausführungsform der Erfindung wird die photokatalytisch aktive Schicht aus der Gruppe, die aus Titanoxid, Titanhydroxid, Titanoxidhydrat und Mischungen davon besteht, ausgewählt.

Auf die zweite Schicht, vorzugsweise mit oder aus Metalloxid(en), -hydroxid(en) und/oder Metalloxidhydrat(en) von Silizium, Zirkonium, Zinn und/oder Aluminium, wird vorzugsweise eine dritte Schicht aus Metalloxid(en), -hydroxid(en) und/oder Metalloxidhydrat(en) aus oder mit Titan aufgebracht.

5

Der Gehalt an Metalloxid(en), -hydroxid(en) und/oder Metalloxidhydrat(en) von Titan liegt vorzugsweise in einem Bereich von 2 bis < 30 Gew.-%, bevorzugt in einem Bereich von 3 bis 28 Gew.-%, besonders bevorzugt in einem Bereich von 4 bis 26 Gew.-% und ganz besonders bevorzugt in einem Bereich von 5 bis 23 Gew.-%, jeweils bezogen auf das Gesamtgewicht des erfindungsgemäßen Pigments.

Der Gehalt oder Anteil der photokatalytisch aktiven Schicht mit oder aus photokatalytisch aktivem(n) Metalloxid(en)-, hydroxid(en) und/oder Metalloxidhydrat(en) von Titan, wird erfindungsgemäß so niedrig gewählt, dass die erfindungsgemäßen Pigmente sowohl unbunt sind als auch noch keine silberne Interferenzfarbe aufweisen.

Ein Maß für die Unbuntheit ist der Chromawert.

Das Chroma der erfindungsgemäßen Pigmente liegt vorzugsweise bei C* ≤ 15, bevorzugt in einem Bereich von C* = 0 bis 13 und besonders bevorzugt in einem Bereich von C* = 0,1 bis 11.

Die Chromawerte werden mit einem Spektralphotometer CM700d, Fa. Konika Minolta, unter D65 Normlicht SCE-Modus anhand von Lackapplikationen auf Schwarz-Weiß-Deckungskarten (Byko Chart 2853, Fa. Byk Gardner) gemessen. Hierzu werden 6 Gew.-% des jeweiligen Pigments, bezogen auf das Gesamtgewicht des Lackes, in einen konventionellen Nitrocelluloselack (Dr. Renger Erco Bronzemischlack 2615e; Fa. Morton) eingerührt. Dabei wird das Pigment vorgelegt und anschließend mit einem Pinsel in den Lack dispergiert. Der fertige Lack wird auf einem Rakelabzugsgerät mit einer Nassfilmdicke von 100 μm auf die Schwarz-Weiß-Deckungskarten appliziert. Die Lackapplikationen werden zur Ermittlung der Farbwerte auf den schwarzen Untergrund der Deckungskarten vermessen, wobei die Farbwerte die Differenz der gemessenen Werte der lackierten Deckungskarte und der unlackierten Deckungskarte darstellt.

Der Gehalt an photokatalytisch aktivem(n) Metalloxid(en), -hydroxid(en) und/oder Metalloxidhydrat(en) von Titan ist abhängig von der spezifischen Oberfläche des erfindungsgemäßen Pigments. Je größer die spezifische Oberfläche des zu beschichtenden Pigments, desto höher ist die benötigte Menge an Edukt zur Beschichtung mit photokatalytisch aktivem(n) Metalloxid(en), -hydroxid(en) und/oder Metalloxidhydrat(en) von Titan.

In Abhängigkeit von der spezifischen Oberfläche des Pigments basierend auf einem plättchenförmigen Substrat liegt der Gehalt an photokatalytisch aktivem(n) Metalloxid(en), - hydroxid(en) und/oder Metalloxidhydrat(en) von Titan (Gehalt Titan), d.h. Gehalt Titan/spezifische Oberfläche [Gew.-% · g/m$^2$], bevorzugt bei < 1,0, besonders bevorzugt in einem Bereich von 0,1 bis 0,9 und ganz besonders bevorzugt in einem Bereich von 0,2 bis 0,7.

In Abhängigkeit von der spezifischen Oberfläche des Pigments basierend auf einem sphärischen Substrat liegt der Gehalt an photokatalytisch aktivem(n) Metalloxid(en), -hydroxid(en) und/oder Metalloxidhydrat(en) von Titan (Gehalt Titan), d. h. Gehalt Titan/spezifische Oberfläche [Gew.-% · g/m$^2$], bevorzugt bei < 3,0, besonders bevorzugt in einem Bereich von 0,1 bis 2,5 und ganz besonders bevorzugt in einem Bereich von 0,2 bis 2,2.

Die mittlere Schichtdicke der photokatalytisch aktiven Schicht mit oder aus Titanoxid, Titanhydroxid und/oder Titanoxidhydrat liegt unabhängig davon, ob das nichtmetallische Substrat plättchenförmig oder sphärisch vorliegt bei ≤ 40 nm, besonders bevorzugt in einem Bereich von 5 bis 36 nm, weiter bevorzugt in einem Bereich von 7 bis 32 nm und ganz besonders bevorzugt in einem Bereich von 10 bis 30 nm. Die mittlere Schichtdicke der photokatalytisch aktiven Schicht mit oder aus Titanoxid, Titanhydroxid und/oder Titanoxidhydrat wird anhand von rasterelektronenmikroskopischen Querschliffaufnahmen der erfindungsgemäßen Pigmente ermittelt. Hierzu wird ein Querschliff eines gehärteten Harzes, in dem die Pigmente parallel zum Untergrund ausgerichtet sind, unter dem Rasterelektronenmikroskop untersucht und die Schichtdicke der photokatalytisch aktiven Schicht mit oder aus Titanoxid, Titanhydroxid und/oder Titanoxidhydrat von mindestens 100 Pigmenten vermessen. Zum Erhalt der mittleren Schichtdicke wird aus diesen Messwerten der Mittelwert gebildet.

Erfindungsgemäß weist das erfindungsgemäße Pigment eine photokatalytisch aktive Beschichtung aus oder mit Titanoxid, Titanhydroxid und/oder Titanoxidhydrat auf.

Bei einer besonders bevorzugten Ausführungsform wird das erfindungsgemäße Pigment nach erfolgter Beschichtung und gegebenenfalls erfolgter Oberflächenmodifizierung nicht kalziniert, sondern nur bei einer Temperatur von ≤ 200°C getrocknet. Aufgrund der Trocknung in diesem Temperaturbereich kristallisiert vorliegendes Titandioxid weder in der Anatas- noch in der Rutilmodifikation, sondern liegt vorzugsweise in amorpher Form vor. Röntgendiffraktometrische Analysen weisen nahezu keine für entsprechend kristalline Schichten typische Reflexe bei z. B. 36°sowie 54° für Rutil oder bei 38° für Anatas auf. Amorphe Substanzen zeichnen sich durch das Fehlen einer Ordnung (z.B. Kristallgitter) aus. Meist besitzen typisch amorphe Substanzen wie z.B. Glas eine "Nahordnung", die sich durch das Auftreten eines "amorphen Hügels" auszeichnen. Dabei ist die Höhe des Hügels vom Anteil der amorphen Substanz abhängig.

Wenn als Substrat kristalline Substanzen wie beispielsweise Glimmer verwendet werden, so verschwindet zumeist jeglicher allgemeine Hügel im Untergrundrauschen.

Durch die Trocknung wird eine sehr hohe spezifische Oberfläche generiert, welche u. a. für die stärkere photokatalytische Wirkung im Vergleich zu gleichartigen kalzinierten Schichten verantwortlich ist. Die spezifische Oberfläche der erfindungsgemäßen Pigmente ist im Allgemeinen recht hoch und liegt bei > 15 m$^2$/g, weiterhin bevorzugt bei > 20 m$^2$/g und besonders bevorzugt bei > 25 m$^2$/g. Es können spezifische Oberflächen von bis zu 70 m$^2$/g, weiter vorzugsweise

bis zu 100 m²/g erhalten werden.

Zur Bestimmung der spezifischen Oberfläche nach BET, vorzugsweise mit dem Gerät BELsorp mini II, Firma BEL, werden die Pigmente 2 h lang bei 300°C beheizt und anschließend die spezifische Oberfläche unter flüssigem Stickstoff, durchgeführt.

Die spezifische Oberfläche ist unter anderem abhängig von der mittleren Teilchengröße $D_{50}$ der erfindungsgemäßen Pigmente. Dabei gilt grundsätzlich, je kleiner die mittlere Teilchengröße $D_{50}$, desto größer ist die spezifische Oberfläche.

Weiterhin ist die spezifische Oberfläche abhängig von der Form der erfindungsgemäßen Pigmente, d.h. dass Pigmente basierend auf sphärischen Substraten mitunter geringere Oberflächenwerte besitzen als plättchenförmige Pigmente der gleichen mittleren Teilchengröße $D_{50}$.

Im Vergleich von erfindungsgemäßen Pigmenten, welche bei einer Temperatur von < 200°C getrocknet wurden, zu kalzinierten Pigmenten, die auf eine Temperatur von üblicherweise 600 bis 900°C erhitzt wurden, ist der Quotient aus der spezifischen Oberfläche zu mittlerer Teilchengröße $D_{50}$ definiert als spezifische Teilchenoberfläche [m/g] deutlich höher und liegt bei > $1{,}0 \cdot 10^6$ m/g.

Ein weiterer Effekt der Trocknung ist, dass der Glühverlust der erfindungsgemäßen Pigmente höher liegt als bei herkömmlichen Perlglanzpigmenten. Vorzugsweise liegt der Glühverlust bei > 1,0 Gew.-%, besonders bevorzugt in einem Bereich von 1,5 bis 10 Gew.-%, weiter bevorzugt in einem Bereich von 1,8 bis 8,0 Gew.-% und ganz besonders bevorzugt in einem Bereich von 2,0 bis 6,0 Gew.-%, jeweils bezogen auf das Gesamtgewicht des Pigments.

Der Glühverlust wird anhand eines Muffelofens bei 850°C bestimmt. Hierzu wird das Pigment in einen bereits vorgeglühten Glühtiegel eingewogen und 1 h bei 850°C beheizt. Anschließend wird nach Abkühlung im Exsikkator der Gewichtsverlust in Prozent ermittelt.

Die Photokatalyse bei Anatas tritt bevorzugt in einem Wellenlängenbereich von ca. 390 nm auf, ist also nur im ultravioletten Licht wirksam. Da der UV-Bereich nur einen geringen Teil des Sonnenlichts ausmacht, ist es möglich, durch Dotierung die Bandlücken von z.B. Anatas zu verringern und so einen größeren Bereich des Sonnenlichtspektrums für photokatalytische Anwendungen auszunutzen. Je nach Dotierungsmittel, unabhängig davon, ob es seiner Natur nach anionisch oder kationisch oder vom Zwischengittertyp ist, können Unterschiede in der Größe der Bandlücke beobachtet werden. Die Bildung von Zwischenenergieniveaus zwischen dem Valenzband und dem Leitungsband eröffnet die Möglichkeit, nicht nur ultraviolette Strahlung, sondern auch sichtbares Licht zur Anregung eines Valenzbandelektrons zu nutzen.

Bei speziellen Ausführungsformen kann die Titanoxid-, Titanhydroxid- und/oder Titanoxidhydratschicht mit Kohlenstoff, Stickstoff, Cer, Aluminium, Zinn und/oder Übergangsmetallen wie z.B. Eisen, Zink dotiert sein. Das jeweilige Dotierungsmittel wird bevorzugt in einer Menge von <1 Gew.-%, besonders bevorzugt in einer Menge von <0,5 Gew.-% und ganz besonders bevorzugt in einer Menge von <0,3 Gew.-%, jeweils bezogen auf das Gesamtgewicht der Titanoxid-, Titanhydroxid- und/oder Titanoxidhydratschicht, eingesetzt.

Die selektiv lichtabsorbierende Barriereschicht kann Licht in einem Wellenlängenbereich von 0,10 bis 10 $\mu$m, bevorzugt in einem Wellenlängenbereich von 0,18 bis 2,5 $\mu$m, weiter bevorzugt in einem Wellenlängenbereich von 0,20 bis 1,0 $\mu$m, besonders bevorzugt in einem Wellenlängenbereich von 0,30 bis 0,80 $\mu$m und ganz besonders bevorzugt in einem Wellenlängenbereich von 0,18 bis 0,40 $\mu$m absorbieren.

Ein Vorteil der erfindungsgemäßen Pigmente ist, dass sie in einem umgebenden Lackfilm nur unwesentlich in Erscheinung treten. Dies ist beispielsweise für Lackierungen interessant, welche zwar den Untergrund schützen sollen, jedoch das Erscheinungsbild des Untergrunds optisch nicht verändern sollen, z. B. Holzschutzlacke, welche die Maserung des Holzes nicht überdecken sollen. Als Maß für die Deckung kann der Deckungsquotient Dq als vom Untergrund unabhängige Maßzahl für die Deckfähigkeit der erfindungsgemäßen Pigmente herangezogen werden. Der Deckungsquotient Dq, definiert als

$$ Dq = \frac{L^*_{110,schwarz}}{L^*_{110,weiß}} $$

wird anhand von Lackapplikationen auf Schwarz-Weiß-Deckungskarten bestimmt. Hierzu wird das Pigment in einer Pigmentierungshöhe von 6 Gew.-%, bezogen auf das Gesamtgewichtes des Nasslacks, in einen konventionellen Nitrocelluloselack (Dr. Renger Erco Bronzemischlack 2615e; Fa. Morton) eingerührt. Der fertige Lack wird auf einem Rakelabzugsgerät mit einer Nassfilmdicke von 100 $\mu$m auf den Schwarz-Weiß-Deckungskarten appliziert. Die Helligkeitswerte L* werden bei einer Messgeometrie von 110°, relativ zum Ausfallwinkel des bei 45° eingestrahlten Lichts, anhand dieser Lackapplikationen auf dem schwarzem und auf dem weißem Hintergrund der Schwarz-Weiß-Deckungskarte mit dem Gerät BYK-mac, Fa. Byk Gardner, vermessen.

Je mehr sich der Wert des Deckungsquotienten Dq dem Wert 0 nähert, desto transparenter erscheint das entsprechende Pigment einem Betrachter bei identischer Pigmentierungshöhe in Gew.-%. Die erfindungsgemäßen Pigmente, basierend auf plättchenförmigen Substraten, weisen vorzugsweise einen Deckungsquotienten Dq < 0,5 auf. Die erfindungsgemäßen Pigmente, basierend auf sphärischen Substraten, weisen vorzugsweise einen Deckungsquotienten Dq < 0,75 auf.

Neben dem geringen Deckungsquotienten zeichnen sich die erfindungsgemäßen Pigmente im Unterschied zu handelsüblichen Interferenzpigmenten durch ihre geringe Reflexionseigenschaft aus. Als Maß für die gerichtete Reflexion lässt sich der Glanz anhand der Lackapplikationen aus IIf "Deckungsquotient" auf Schwarz-Weiß-Deckungskarten (Byko Chart 2853, Fa. Byk Gardner) mit Hilfe eines Micro-Tri-Gloss Glanzmessgerätes, Fa. Byk Gardner, auf schwarzem Untergrund bei einem Messwinkel von 20° bezogen auf die Vertikale vermessen.

Die erfindungsgemäßen Pigmente, basierend auf plättchenförmigen Substraten, weisen vorzugsweise Glanzwerte von <5, weiter bevorzugt von <4,5 und besonders bevorzugt von < 4,2 auf.

Erfindungsgemäße Pigmente, basierend auf sphärischen Substraten, weisen vorzugsweise Glanzwerte von <3,0 und besonders bevorzugt von < 2,0 auf.

Photokatalytisch wirkende Titandioxidpartikel sind Stand der Technik und werden in vielen Anwendungen wie zum Beispiel in Pflastersteinen oder in silikatischen Wandfarben eingesetzt. Dabei ist ihr Einsatz vor allem auf anorganische Matrices beschränkt, da die photokatalytische Wirkung nach allen Seiten hin wirkt und beispielsweise organische Bindemittel genauso wie etwaige Verschmutzungen in unmittelbarer Nähe zum Titandioxidpartikel radikalisch angegriffen werden.

Der gezielte Einbau einer Barriereschicht im Pigment verhindert, dass Radikale überall um ein Pigment herum in der Bindemittelmatrix generiert oder weitertransportiert werden und so den üblichen kompletten Abbau hervorrufen. Damit diese Barriereschicht nicht die photokatalytische Aktivität des Pigments unterbindet oder einschränkt, ist es notwendig, die Barriereschicht zwischen nichtmetallischem Substrat und photokatalytisch aktiver Schicht aus oder mit Titanoxid, Titanhydroxid und/oder Titanoxidhydrat, beispielsweise einer $TiO_2$-Schicht, anzuordnen.

Mit diesem erfindungsgemäßen speziellen Pigmentaufbau ist es möglich, dass die in der Bindemittelmatrix oberflächennah eingebetteten Pigmente durch Photokatalyse Radikale generieren und organische Schadstoffkomponenten in deren Umgebung in gewünschter Art und Weise abbauen.

Radikale werden jedoch nur an den dem Licht zugewandten Pigmentbereichen gebildet, an den durch das Pigment abgeschatteten Bereichen erfolgt keine Radikalbildung, da hier die aufgebrachte Barriereschicht in doppelter Weise wirksam ist. Zum einen kann die Barriereschicht entstehende Elektronen aufzunehmen (Elektronenakzeptor) und eine Radikalbildung verhindern, und zum anderen kann die Barriereschicht das Anregungslicht, beispielsweise UV-Licht, filtern und somit einen Durchgang des Anregungslichts, beispielsweise des UV-Lichts, an die Unterseite des Pigmentes verringern.

Dadurch ist gewährleistet, dass das erfindungsgemäße Pigment mit photokatalytischer Aktivität fest in der organischen Bindemittelmatrix verankert bleibt, und damit deutlich länger die photokatalytische Aktivität in der Beschichtung erhalten bleibt bzw. zur Verfügung steht.

Wie die aus dem Stand der Technik bekannten wetterstabilisierten Perlglanzpigmente besitzen die erfindungsgemäßen Pigmente ebenfalls eine Barriereschicht, beispielsweise aus oder mit Ceroxid/-hydroxid. Allerdings ist bei den erfindungsgemäßen Pigmenten die Barriereschicht invers, also dem Substrat zugewandt aufgebracht. Im Stand der Technik wird die Barriereschicht als außenliegende, mithin nicht als innenliegende Schicht angeordnet. Diese Schichtenfolge ermöglicht eine hohe Photoaktivität an der dem Licht zugewandten Oberfläche, verhindert jedoch das Entstehen von Photoaktivität an der Pigmentunterseite.

Dieser Effekt kann sehr gut mit Hilfe des Tests zur Bestimmung des Bindemittelabbaus sowie der photokatalytischen Aktivität (IIj) dargestellt werden. Hier zeigen die erfindungsgemäßen Pigmente eine hohe reinigende Wirkung, ohne jedoch das umgebende Bindemittel stark in Mitleidenschaft zu ziehen.

Zur Herstellung der erfindungsgemäßen Pigmente wird das nichtmetallische plättchenförmige oder sphärische Substrat in einem flüssigen Medium, vorzugsweise in Wasser suspendiert. Der Suspension wird vorzugsweise bei einer Temperatur aus einem Bereich von 50°C bis 100°C und vorzugsweise bei einem konstant gehaltenen pH-Wert aus einem Bereich von 3,5 bis 10,0 gehalten. Zur Auffällung der Barriereschicht wird vorzugsweise eine wasserlösliche anorganische Metallverbindung, vorzugsweise eine anorganische Cer- oder Zinkverbindung, zugegeben. ZurAuffällung einer etwaigen weiteren anorganischen Schicht, die vorzugsweise photokatalytisch inaktiv ist, wird beispielsweise in wässriger Lösung unter Dosierung einer Alkaliwasserglas- und/oder einer Zinn-, Aluminium- oder Zirkoniumsalzlösung bei konstantem pH-Wert eine anorganische Deckschicht aufgebracht. Anschließend wird zur Auffällung der außenliegenden photokatalytisch aktiven Schicht vorzugsweise eine wasserlösliche anorganische Titanverbindung zugegeben. Nach beendeter Zugabe der wasserlöslichen Titanverbindung wird die nun erhaltene Suspension vorzugsweise wenigstens 30 Minuten nachgerührt, filtriert und der Filterkuchen anschließend bei < 200°C getrocknet.

Alternativ können die erfindungsgemäßen Pigmente auch in alkoholischem Medium hergestellt werden. Hierzu wird das nichtmetallische, vorzugsweise plättchenförmige oder sphärische, Substrat in einer alkoholischen Flüssigphase suspendiert und durch Zugabe, vorzugsweise einer Cer- oder Zink-haltigen Lösung bei konstantem pH-Wert, eine entsprechende Barriereschicht gebildet.

ZurAuffällung einer etwaigen weiteren anorganischen Schicht, die vorzugsweise photokatalytisch inaktiv ist, wird im entsprechenden Medium beispielsweise eine Alkaliwasserglas- und/oder einer Zinn-, Aluminium- oder Zirkoniumsalzlösung bei konstantem pH-Wert zudosiert.

Die Fällung der anschließenden photokatalytisch aktiven Schicht, vorzugsweise einer hochbrechenden Titanschicht erfolgt unter gleichzeitiger Zudosierung eines Titanalkoholates und Wasser. Optional kann eine Oberflächenmodifizierung durch Zugabe von wenigstens einem Silan mit einer funktionellen Bindungsgruppe und/oder wenigstens einem Silan ohne funktionelle Bindungsgruppe erfolgen.

Die erfindungsgemäßen Pigmente können optional mit einer organisch-chemischen Oberflächenmodifizierung versehen werden, die die Einarbeitung der Pigmente in unterschiedliche Lacksysteme erleichtern, die Hydrophilie oder Hydrophobie der Pigmentoberfläche verändern oder deren Orientierung in einem Lacksystem beeinflussen kann. Bei einer bevorzugten Ausführungsform orientieren sich die erfindungsgemäßen Pigmente an der Oberfläche eines Lackfilms, d. h. durch die optional vorhandene Oberflächenmodifizierung werden Pigmente mit Leafing-Verhalten erzeugt.

Bei einer besonders bevorzugten Ausführungsform orientieren sich die erfindungsgemäßen Pigmente nahe unterhalb der Oberfläche eines Lackfilms, so dass die Pigmente gut in der sie umgebenden Lackmatrix eingearbeitet sind, die Lackschicht oberhalb des erfindungsgemäßen Pigmentes jedoch sehr gering ausfällt. Somit kann das Pigment durch Photokatalyse diese gezielt abbauen und dann zur photokatalytischen Oberflächenreinigung beitragen.

Die erfindungsgemäßen Pigmente sind vorzugsweise Leafingpigmente, die sich an der Oberfläche oder in der Nähe der Oberfläche eines Bindemittelsystems, beispielsweise eines Lackes oder einer Farbe, anordnen.

Die optional vorhandene Oberflächenmodifizierung kann ein oder mehrere Silane umfassen oder daraus bestehen. Bei den Silanen kann es sich um Alkylsilane mit verzweigten oder unverzweigten Alkylresten mit 1 bis 24 C-Atomen handeln.

Bei einer bevorzugten Ausführungsform werden zur Oberflächenmodifizierung der erfindungsgemäßen Pigmente vorzugsweise organofunktionelle Silane eingesetzt, die eine chemische Anbindung an z.B. eine umgebende Bindemittelmatrix eines Lacksystems ermöglichen und so die Einbindung der erfindungsgemäßen Pigmente bzw. deren Orientierung in einem Lacksystem beeinflussen können.

Als organofunktionelle Silane können beispielsweise 3-Methacryloxypropyltrimethoxysilan (Dynasylan MEMO, Fa. Evonik; Silquest A-174NT, Fa. Momentive), Vinyltri(m)ethoxysilan (Dynasylan VTMO bzw. VTEO; Silquest A-151 bzw. A-171), Methyltri(m)ethoxysilan (Dynasylan MTMS bzw. MTES), 3-Mercaptopropyltrimethoxysilan (Dynasylan MTMO; Silquest A-189), 3-Glycidoxypropyltrimethoxysilan (Dynasylan GLYMO; Silquest A-187), Tris[3-(trimethoxysilyl)propyl]isocyanurat (Silquest Y-11597), Bis[3-(triethoxysilyl)propyl]tetrasulfid (Silquest A-1289), Bis[3-(triethoxysilyl)propyl]disulfid (Silquest A-1589), beta-(3,4-Epoxycyclohexyl)ethyltrimethoxysilan (Silquest A-186), Bis(triethoxysilyl)ethan (Silquest Y-9805), gamma-Isocyanatopropyltrimethoxysilan (Silquest A-Link 35; Geniosil GF40, Fa. Wacker), Methacryloxymethyltri(m)ethoxysilan (Geniosil XL 33, Geniosil XL 36), (Methacryloxymethyl)methyldimethoxysilan (Geniosil XL 32, Geniosil XL 34), (Methacryloxymethyl)methyldiethoxysilan, (Isocyanatomethyl)methyldimethoxysilan, (Isocyanatomethyl)trimethoxysilan, 3-(Triethoxysilyl)propylbernsteinsäureanhydrid, 2-Acryloxyethylmethyldimethoxysilan, 2-Methacryloxyethyltrimethoxysilan, 3-Acryloxypropylmethyldimethoxysilan, 2-Acryloxyethyltrimethoxysilan, 2-Methacryloxyethyltriethoxysilan, 3-Acryloxypropyltrimethoxysilan, 3-Acryloxypropyltripropoxysilan, 3-Methacryloxypropyltriethoxysilan, 3-Methacryloxypropyltriacetoxysilan, 3- Methacryloxypropylmethyldimethoxysilan, Vinyltrichlorsilan, Vinyltri(m)ethoxysilan (Geniosil XL 10, Geniosil GF 56), Vinyltris(2-methoxyethoxy)silan, Vinyltriacetoxysilan oder Mischungen davon eingesetzt werden.

Bevorzugt werden als organofunktionelle Silane 3-Methacryloxypropyltrimethoxysilan (Dynasylan MEMO; SilquestA-174NT), Vinyltri(m)ethoxysilan (Dynasylan VTMO bzw. VTEO; Silquest A-151 bzw. A-171), Methyltri(m)ethoxysilan (Dynasylan MTMS bzw. MTES), beta-(3,4-Epoxycyclohexyl)ethyltrimethoxysilan (Silquest A-186), Bis(triethoxysilyl)ethan (Silquest Y-9805), gamma-Isocyanatopropyltrimethoxysilan (Silquest A-Link 35; Geniosil GF40), Methacryloxymethyltri(m)ethoxysilan (Geniosil XL 33, Geniosil XL 36), (Methacryloxymethyl)(m)ethyldimethoxysilan (Geniosil XL 32, Geniosil XL 34), 3-(Triethoxysilyl)propylbernsteinsäureanhydrid, Vinyltrimethoxysilan (Geniosil XL 10), Vinyltris(2-methoxyethoxy)silan oder Mischungen davon verwendet.

Weiterhin können wässrige Vorhydrolysate eingesetzt werden. Hierzu gehören unter anderem wässriges Aminosiloxan (Dynasylan Hydrosil 1151, Fa. Evonik), wässriges amino-/alkylfunktionelles Siloxan (Dynasylan Hydrosil 2627 oder 2909), wässriges diaminofunktionelles Siloxan (Dynasylan Hydrosil 2776), wässriges, wässriges epoxyfunktionelles Siloxan (Dynasylan Hydrosil 2926), amino-/ alkylfunktionelles Oligosiloxan (Dynasylan 1146), vinyl-/ alkylfunktionelles Oligosiloxan (Dynasylan 6598), oligomeres Vinylsilan (Dynasylan 6490) oder oligomeres kurzkettiges alkylfunktionelles Silan (Dynasylan 9896).

Bei einer weiteren Ausführungsform können zur Oberflächenmodifizierung der erfindungsgemäßen Pigmente Mischungen mit oder aus organofunktionellen Silanen und wässrigen Vorhydrolysaten eingesetzt werden.

Bei einer weiteren Ausführungsform umfasst oder besteht die Oberflächenmodifizierung der erfindungsgemäßen Pigmente aus wenigstens einem Alkylsilan und wenigstens einem aminofunktionellen Silan. Bei dem Alkylsilan handelt es sich vorzugsweise um ein Alkylsilan der Formel $R_{(4-z)}Si(X)_z$, wobei z eine ganze Zahl von 1 bis 3, R ist eine substituierte oder unsubstituierte, unverzweigte oder verzweigte Alkylkette mit 10 bis 22 C-Atomen ist und X für eine Halogen- und/oderAlkoxygruppe steht. Ganz besonders bevorzugt sind Alkylsilane mit mindestens 12 C-Atomen in der Alkylkette.

Als aminofunktionelle Silane können 3-Aminopropyltrimethoxysilan (Dynasylan AMMO, Fa. Evonik; Silquest A-1110, Fa. Momentive), 3-Aminopropyltriethoxysilan (Dynasylan AMEO), [3-(2-Aminoethyl)aminopropyl]trimethoxysilan (Dynasylan DAMO, Silquest A-1120, [3-(2-Aminoethyl)aminopropyl]triethoxysilan, triaminofunktionelles Trimethoxysilan (Silquest A-1130), Bis-(gamma-trimethoxysilylpropyl)amin (Silquest A-1170), N-Ethyl-gammaaminoisobutyltrimethoxysilan (Silquest A-Link 15), N-Phenyl-gammaaminopropyltrimethoxysilan (Silquest Y-9669), 4-Amino-3,3-dimethylbutyltrimethoxysilan (Silquest A-1637), N-Cyclohexylaminomethylmethyldiethoxysilan (Geniosil XL 924), N-Cyclohexylaminomethyltriethoxysilan (Geniosil XL 926), N-Phenylaminomethyltrimethoxysilan (Geniosil XL 973) oder deren Mischungen zum Einsatz kommen.

Bei einer besonders bevorzugten Ausführungsform umfasst die vorliegende Erfindung ein Pigment basierend auf einem nichtmetallischen plättchenförmigen Substrat, vorzugsweise natürlichen oder synthetischen Glimmerplättchen oder Glasplättchen, und einer darauf aufgebrachten Beschichtung, wobei die Beschichtung ausgehend vom Substrat aus den folgenden Schichten besteht:

a) Metalloxiden, -hydroxiden und/oder Metalloxidhydraten von Cer mit einem Gehalt aus einem Bereich von 0,1 bis 1,4 Gew.-%, bezogen auf das Gesamtgewicht des Pigments,
b) Metalloxiden, -hydroxiden und/oder Metalloxidhydraten von Silizium mit einem Gehalt aus einem Bereich von 0,4 bis 2,2 Gew.-%, bezogen auf das Gesamtgewicht des Pigments,
c) Metalloxiden, -hydroxiden und/oder Metalloxidhydraten von Titan, mit einem Gehalt aus einem Bereich von 5,2 bis 24,0 Gew.-%, bezogen auf das Gesamtgewicht des Pigments sowie
d) optional einer organisch-chemischen Oberflächenmodifizierung.

Bei einer weiteren bevorzugten Ausführungsform umfasst die vorliegende Erfindung ein Pigment basierend auf einem nichtmetallischen plättchenförmigen Substrat, vorzugsweise natürlichen oder synthetischen Glimmerplättchen oder Glasplättchen, und einer darauf aufgebrachten Beschichtung, wobei die Beschichtung ausgehend vom Substrat aus den folgenden Schichten besteht:

a) Metalloxiden, -hydroxiden und/oder Metalloxidhydraten von Cer mit einem Gehalt aus einem Bereich von 0,1 bis 1,4 Gew.-%, bezogen auf das Gesamtgewicht des Pigments,
b) Metalloxiden, -hydroxiden und/oder Metalloxidhydraten von Silizium mit einem Gehalt aus einem Bereich von 0,4 bis 2,2 Gew.-%, bezogen auf das Gesamtgewicht des Pigments,
c) Metalloxiden, -hydroxiden und/oder Metalloxidhydraten von Titan, mit einem Gehalt aus einem Bereich von 5,2 bis 24,0 Gew.-%, bezogen auf das Gesamtgewicht des Pigments sowie
d) optional einer organisch-chemischen Oberflächenmodifizierung,
wobei das Pigment vorzugsweise eine spezifische Oberfläche nach BET aus einem Bereich von 17 bis 50 m$^2$/g besitzt.

Bei einer bevorzugten Ausführungsform umfasst die vorliegende Erfindung ein Pigment basierend auf einem nichtmetallischen plättchenförmigen Substrat, vorzugsweise natürlichen oder synthetischen Glimmerplättchen oder Glasplättchen, und einer darauf aufgebrachten Beschichtung, wobei die Beschichtung ausgehend vom Substrat aus den folgenden Schichten besteht:

a) Metalloxiden, -hydroxiden und/oder Metalloxidhydraten von Zink mit einem Gehalt aus einem Bereich von 0,3 bis 2,9 Gew.-%, bezogen auf das Gesamtgewicht des Pigments,
b) Metalloxiden, -hydroxiden und/oder Metalloxidhydraten von Silizium mit einem Gehalt aus einem Bereich von 0,4 bis 2,5 Gew.-%, bezogen auf das Gesamtgewicht des Pigments,
c) Metalloxiden, -hydroxiden und/oder Metalloxidhydraten von Titan, mit einem Gehalt aus einem Bereich von 4,9 bis 22,5 Gew.-%, bezogen auf das Gesamtgewicht des Pigments sowie
d) optional einer organisch-chemischen Oberflächenmodifizierung.

Bei einer weiteren Ausführungsform umfasst die vorliegende Erfindung ein Pigment basierend auf einem nichtmetallischen plättchenförmigen Substrat, vorzugsweise natürlichen oder synthetischen Glimmerplättchen oder Glasplättchen, und einer darauf aufgebrachten Beschichtung, wobei die Beschichtung ausgehend vom Substrat aus den folgenden Schichten besteht:

a) Metalloxiden, -hydroxiden und/oder Metalloxidhydraten von Cer mit einem Gehalt aus einem Bereich von 0,3 bis 2,8 Gew.-%, bezogen auf das Gesamtgewicht des Pigments,
b) Metalloxiden, -hydroxiden und/oder Metalloxidhydraten von Zinn mit einem Gehalt aus einem Bereich von 0,3 bis 2,8 Gew.-%, bezogen auf das Gesamtgewicht des Pigments,
c) Metalloxiden, -hydroxiden und/oder Metalloxidhydraten von Titan mit einem Gehalt aus einem Bereich von 5,6 bis 23,6 Gew.-%, bezogen auf das Gesamtgewicht des Pigments sowie
d) optional einer organisch-chemischen Oberflächenmodifizierung.

Bei einer weiteren Ausführungsform umfasst die vorliegende Erfindung ein Pigment basierend auf einem nichtmetallischen plättchenförmigen Substrat, vorzugsweise natürlichen oder synthetischen Glimmerplättchen oder Glasplättchen, und einer darauf aufgebrachten Beschichtung, wobei die Beschichtung ausgehend vom Substrat aus den folgenden Schichten besteht:

a) Metalloxiden, -hydroxiden und/oder Metalloxidhydraten von Cer mit einem Gehalt aus einem Bereich von 0,2 bis 1,3 Gew.-%, bezogen auf das Gesamtgewicht des Pigments,
b) Metalloxiden, -hydroxiden und/oder Metalloxidhydraten von Titan, mit einem Gehalt aus einem Bereich von 6,5 bis 24,6 Gew.-%, bezogen auf das Gesamtgewicht des Pigments sowie
c) optional einer organisch-chemischen Oberflächenmodifizierung.

Bei einer weiteren Ausführungsform umfasst die vorliegende Erfindung ein Pigment basierend auf einem nichtmetallischen plättchenförmigen Substrat, vorzugsweise natürlichen oder synthetischen Glimmerplättchen oder Glasplättchen, und einer ersten Schicht mit oder aus Metalloxiden, -hydroxiden und/oder Metalloxidhydraten von Cer, einer zweiten Schicht mit oder aus Metalloxiden, -hydroxiden und/oder Metalloxidhydraten von Silizium, einer dritten Schicht mit oder aus Metalloxiden, -hydroxiden und/oder Metalloxidhydraten von Titan, optional einer Oberflächenmodifizierung, wobei das Pigment nach erfolgter Beschichtung und gegebenenfalls erfolgter organisch-chemischer Oberflächenmodifizierung bei einer Temperatur aus einem Bereich von 80 bis 160°C getrocknet wurde.
Bei einer weiteren Ausführungsform umfasst die vorliegende Erfindung ein Pigment basierend auf einem nichtmetallischen sphärischen Substrat, vorzugsweise Glashohlkugeln, und einer darauf aufgebrachten Beschichtung, wobei die Beschichtung ausgehend vom Substrat aus den folgenden Schichten besteht:

a) Metalloxiden, -hydroxiden und/oder Metalloxidhydraten von Cer mit einem Gehalt aus einem Bereich von 0,2 bis 0,9 Gew.-%, bezogen auf das Gesamtgewicht des Pigments,
b) Metalloxiden, -hydroxiden und/oder Metalloxidhydraten von Silizium mit einem Gehalt aus einem Bereich von 0,4 bis 2,8 Gew.-%, bezogen auf das Gesamtgewicht des Pigments,
c) Metalloxiden, -hydroxiden und/oder Metalloxidhydraten von Titan, mit einem Gehalt aus einem Bereich von 3,0 bis 11,0 Gew.-%, bezogen auf das Gesamtgewicht des Pigments sowie
d) optional einer organisch-chemischen Oberflächenmodifizierung.

Beispiele

Die folgenden Beispiele sollen die Erfindung näher erläutern, ohne sie jedoch zu beschränken. Alle Prozentangaben sind als Gew.-% zu verstehen.

**I Herstellung der erfindungsgemäßen Pigmente**

Beispiel 1

270 g synthetische Glimmerplättchen (FM1040, Fa. Jhejan, China) mit der Teilchengrößenverteilung $D_{10}$ = 11,4 $\mu$m, $D_{50}$ = 21,8 $\mu$m, $D_{90}$ = 40,0 $\mu$m (Mastersizer MS 2000, Fa. Malver) wurden in 1350 ml VE-Wasser (VE = vollentsalzt) suspendiert und unter Rühren auf 80°C erhitzt. Der pH-Wert wurde mit verdünnter Salzsäure bzw. verdünnter Alkalilauge (je nach Anfangs pH-Wert) auf 7,5 eingestellt. Durch Zugabe von 150 ml einer 1,4 Gew.-%igen Cernitratlösung unter gleichzeitiger Zudosierung einer Alkalilauge wurde eine entsprechende Schicht gebildet. Sodann wurde eine Wasserglaslösung (5,6 g Wasserglaslösung, 27 Gew.-% $SiO_2$ gemischt mit 20 g VE-Wasser) langsam in die Suspension eingeleitet und der pH-Wert konstant bei pH 7,5 gehalten. Die Suspension wurde 2 h nachgerührt und dann der pH-Wert auf pH 2,0 eingestellt. Anschließend wurde eine Lösung von 150 ml $TiCl_4$ (200 g $TiO_2$/l VE-Wasser) sowie eine 10 Gew.-%ige wässrige Natronlauge in die Suspension hinzudosiert. Nach dem Ende der Beschichtung wurde 1 h nachgerührt und abfiltriert. Das erhaltene Pigment wurde 12 h bei 90°C im Vakuumtrockenschrank getrocknet.

Beispiel 2

270 g natürliche Glimmerplättchen (Muskovit Glimmerplättchen) mit der Teilchengrößenverteilung $D_{10}$ = 11,0 $\mu$m, $D_{50}$ = 23,1 $\mu$m, $D_{90}$ = 44,4 $\mu$m (Mastersizer MS 2000, Fa. Malvern) wurden in 1350 ml VE-Wasser suspendiert und unter Rühren auf 80°C erhitzt. Der pH-Wert wurde mit verdünnter Salzsäure bzw. verdünnterAlkalilauge (je nach Anfangs pH-Wert) auf 7,5 eingestellt. Durch Zugabe von 150 ml einer 1,4 Gew.-%igen Cernitratlösung unter gleichzeitiger Zudosierung einer Alkalilauge wurde eine entsprechende Schicht gebildet. Sodann wurde eine Wasserglaslösung (5,6 g Wasserglaslösung, 27% $SiO_2$, gemischt mit 20 g VE-Wasser) langsam in die Suspension eingeleitet und der pH-Wert konstant bei pH 7,5 gehalten. Die Suspension wurde nun 2 h nachgerührt und dann der pH-Wert auf 2,0 eingestellt. Anschließend wurde eine Lösung von 150 ml $TiCl_4$ (200 g $TiO_2$/l VE-Wasser) sowie eine 10 Gew.-%ige wässrige Natronlauge in die Suspension hinzudosiert. Nach dem Ende der Beschichtung wurde 1h nachgerührt und abfiltriert. Das erhaltene Pigment wurde 12 h bei 90°C im Vakuumtrockenschrank getrocknet.

Beispiel 3

Eine Suspension von 200 g Glasplättchen (mittlere Dicke: 1 $\mu$m, Standardabweichung der Dicke: ca. 40 %) in VE-Wasser (ca. 3 Gew.-%ig) wurde über ein 100 $\mu$m Sieb klassiert, der Siebdurchgang über ein 75 $\mu$m Sieb gesiebt. Dieser letztere Siebdurchgang wurde über ein 40$\mu$m Sieb gesiebt. Die Siebprozedur wurde mit dem < 40 $\mu$m Sieb erhaltenen Siebrückstand zweimal wiederholt. Es wurden Glasplättchen erhalten, die folgende Teilchengrößenverteilung aufwiesen: $D_{10}$=1 6,1 $\mu$m, $D_{50}$ = 32,2 $\mu$m, $D_{90}$ = 57,7 $\mu$m (Mastersizer MS 2000, Fa. Malvern).
150 g der klassierten Glasplättchen wurden in 1350 ml VE-Wasser suspendiert und unter Rühren auf 80°C erhitzt. Der pH-Wert wurde mit verdünnter Salzsäure bzw. verdünnter Alkalilauge (je nach Anfangs pH-Wert) auf 7,5 eingestellt. Durch Zugabe von 150 ml einer 1,4 Gew.-%igen Cernitratlösung unter gleichzeitiger Zudosierung einer Alkalilauge wurde eine entsprechende Schicht gebildet. Sodann wurde eine Wasserglaslösung (3,1 g Wasserglaslösung, 27 % $SiO_2$, gemischt mit 20 g VE-Wasser) langsam in die Suspension eingeleitet und der pH-Wert konstant bei pH 7,5 gehalten. Die Suspension wurde nun 2 h nachgerührt und dann der pH-Wert auf 2,0 eingestellt. Anschließend wurde eine Lösung von 40 ml $TiCl_4$ (200 g $TiO_2$/l VE-Wasser) sowie eine 10 % ige wässrige Natronlauge in die Suspension hinzudosiert. Nach dem Ende der Beschichtung wurde 1h nachgerührt und abfiltriert. Das erhaltene Pigment wurde 12 h bei 90°C im Vakuumtrockenschrank getrocknet.

Beispiel 4

270 g synthetische Glimmerplättchen (FM1040, Fa. Jhejan, China) mit der Teilchengrößenverteilung $D_{10}$=11,4 $\mu$m, $D_{50}$=21,8 $\mu$m, $D_{90}$=40,0 $\mu$m (Mastersizer MS 2000, Fa. Malvern) wurden in 1350 ml VE-Wasser suspendiert und unter Rühren auf 80°C erhitzt. Der pH-Wert wurde mit verdünnter Salzsäure bzw. verdünnter Alkalilauge (je nach Anfangs pH-Wert) auf 10,5 eingestellt. Durch Zugabe von 50 ml einer 5,2 Gew.-%igen Zinkchloridlösung unter gleichzeitiger Zudosierung einer Alkalilauge wurde eine entsprechende Schicht gebildet. Sodann wurde eine Wasserglaslösung (5,6 g Wasserglaslösung, 27% $SiO_2$, gemischt mit 20 g VE-Wasser) bei pH 7,5 langsam in die Suspension eingeleitet und der pH-Wert konstant bei pH 7,5 gehalten. Die Suspension wurde nun 2h nachgerührt und dann der pH-Wert auf 2,0 eingestellt. Anschließend wurde eine Lösung von 225 ml $TiCl_4$ (200 g $TiO_2$/l VE-Wasser) sowie eine 10 Gew.-%ige wässrige Natronlauge in die Suspension hinzudosiert. Nach dem Ende der Beschichtung wurde 1 h nachgerührt und abfiltriert. Das erhaltene Pigment wurde 12 h bei 90°C im Vakuumtrockenschrank getrocknet.

Beispiel 5

270 g synthetische Glimmerplättchen (FM0525, Fa. Jhejan, China) mit der Teilchengrößenverteilung $D_{10}$=5,2 $\mu$m, $D_{50}$=11,2 $\mu$m, $D_{90}$=23,9 $\mu$m (Mastersizer MS 2000, Fa. Malvern) wurden in 1500 ml VE-Wasser suspendiert und unter Rühren auf 80°C erhitzt. Durch Zugabe von 150 ml einer 1,4 Gew. %igen Cernitratlösung unter gleichzeitiger Zudosierung einer Alkalilauge wurde eine entsprechende Schicht gebildet. Der pH-Wert der Suspension wurde mit verdünnter HCl auf pH 2,2 eingestellt und sodann durch Zugabe einer Zinnchlorid-Lösung eine 10 nm dicke $SnO_2$ - Schicht auf das Substrat gefällt. Die Suspension wurde nun 2 h nachgerührt und anschließend eine Lösung von 150 ml $TiCl_4$ (200 g $TiO_2$/l VE-Wasser) sowie eine 10 Gew.-%ige wässrige Natronlauge in die Suspension hinzudosiert. Nach dem Ende der Beschichtung wurde 1h nachgerührt und abfiltriert. Das erhaltene Pigment wurde 12 h bei 90°C im Vakuumtrockenschrank getrocknet.

Beispiel 6

270 g synthetische Glimmerplättchen (FM0015, Fa. Jhejan, China) mit der Teilchengrößenverteilung $D_{10}$= 2,0

$\mu$m, $D_{50}$= 6,1 $\mu$m, $D_{90}$= 12,9 $\mu$m (Mastersizer MS 2000, Fa. Malvern) wurden in 1600 ml VE-Wasser suspendiert und unter Rühren auf 80°C erhitzt. Der pH-Wert wurde mit verdünnter Salzsäure bzw. verdünnter Alkalilauge (je nach Anfangs pH-Wert) auf 7,5 eingestellt. Durch Zugabe von 150 ml einer 1,4 Gew. %igen Cernitratlösung unter gleichzeitiger Zudosierung einer Alkalilauge wurde eine entsprechende Schicht gebildet. Sodann wurde eine Wasserglaslösung (5,6 g Wasserglaslösung, 27 % $SiO_2$, gemischt mit 20 g VE-Wasser) langsam in die Suspension eingeleitet und der pH-Wert konstant bei pH 7,5 gehalten. Die Suspension wurde nun 2 h nachgerührt und dann der pH-Wert auf 2,0 eingestellt. Anschließend wurde eine Lösung von 150 ml $TiCl_4$ (200 g $TiO_2$/l VE-Wasser) sowie eine 10 Gew.-%ige wässrige Natronlauge in die Suspension hinzudosiert. Nach dem Ende der Beschichtung wurde 1 h nachgerührt und abfiltriert. Das erhaltene Pigment wurde 12 h bei 90°C im Vakuumtrockenschrank getrocknet.

Beispiel 7

150 g Mikroglashohlkugeln (S32, Fa. 3M) mit einer Teilchengröße von $D_{10}$ = 20,0 $\mu$m, $D_{50}$=40 $\mu$m, $D_{90}$= 75 $\mu$m (gemäß Herstellerangaben) wurden in 1150 ml VE-Wasser suspendiert und unter Rühren auf 80°C erhitzt. Der pH-Wert wurde mit verdünnter Salzsäure bzw. verdünnter Alkalilauge (je nach Anfangs pH-Wert) auf 7,5 eingestellt. Durch Zugabe von 150 ml einer 1,4 Gew.-%igen Cernitratlösung unter gleichzeitiger Zudosierung einer Alkalilauge wurde eine entsprechende Schicht gebildet. Sodann wurde eine Wasserglaslösung (0,9 g Wasserglaslösung, 27 % $SiO_2$, gemischt mit 20 g VE-Wasser) langsam in die Suspension eingeleitet und der pH-Wert konstant bei pH 7,5 gehalten. Die Suspension wurde nun 2 Stunden nachgerührt und dann der pH-Wert auf 2,0 eingestellt. Anschließend wurde eine Lösung von 30 ml $TiCl_4$ (200 g $TiO_2$/l VE-Wasser) sowie eine 10 Gew.-%ige wässrige Natronlauge in die Suspension hinzudosiert. Nach dem Ende der Beschichtung wurde 1 h nachgerührt und abfiltriert. Das erhaltene Pigment wurde 12 h bei 90°C im Vakuumtrockenschrank getrocknet.

Beispiel 8

150 g synthetische Glimmerplättchen (FM1040, Fa. Jhejan, China) mit der Teilchengrößenverteilung $D_{10}$=11,4 $\mu$m, $D_{50}$=21,8 $\mu$m, $D_{90}$=40,0 $\mu$m (Mastersizer MS 2000, Fa. Malvern) wurden in einem Gemisch aus 800 ml Isopropanol und 100 ml VE-Wasser suspendiert und unter Rühren auf 70°C erhitzt. Nach dem Erreichen der Temperatur wurde mit der Zugabe von 9,4 g einer 1,4 Gew.-%igen isopropanolischen Cernitratlösung begonnen. Die Suspension wurde nun 2h nachgerührt und dann der pH-Wert mit Hilfe einer 25 Gew.-%igen Ammoniaklösung. auf pH 5,0 eingestellt. Anschließend wurde eine Lösung aus 60 g Titan(IV)isopropylat, gelöst in 60ml Isopropanol, zudosiert. Anschließend wurde 1 h nachgerührt und abfiltriert. Das erhaltene Pigment wurde 12 h bei 90°C im Vakuumtrockenschrank getrocknet und über ein Sieb der Siebmaschenweite von 45 $\mu$m klassiert.

Vergleichsbeispiel 1

100 g kommerziell erhältliches, silbernes Perlglanzpigment auf Basis von TiO2 beschichtetem Glimmer der Feinheit 10 - 50 $\mu$m (PHOENIX PX 1001, Fa. Eckart) wurden in 300 ml Isopropanol suspendiert und auf Siedetemperatur gebracht. Unter Rühren gab man zunächst 2,0 g $H_2O$ und anschließend innerhalb einer Stunde eine Lösung aus 2,17 g $Ce(NO_3)_3$ in 100 g Isopropanol hinzu. Anschließend wurde eine Lösung von 0,45 g Ethylendiamin in 3,0 g $H_2O$ hinzugegeben. Danach leitete man über einen Zeitraum von 2 h 10,6 g Tetraethoxysilan und 22 g Isopropanol mit einer Dosierpumpe (Ismatec) kontinuierlich ein. Anschließend ließ man die Suspension noch 6 h lang weiter reagieren. Dann gab man 0,4 g Dynasylan AMEO und 1,3 g Dynasylan 9116 hinzu und ließ langsam abkühlen. Das Gemisch wurde über Nacht bei Raumtemperatur gerührt und am nächsten Tag abfiltriert. Das Pigment wurde anschließend bei 80°C unter Vakuum getrocknet. Das Pigment hatte einen theoretischen Ce-Gehalt von 0,7 Gew.-% und einen $SiO_2$-Gehalt von 3,0 Gew.-%.

Vergleichsbeispiel 2

Versuch analog Beispiel 4, allerdings wurde eine Lösung von 550 ml $TiCl_4$ (200 g $TiO_2$/l VE-Wasser) sowie eine 10 Gew.-%ige wässrige Natronlauge in die Suspension hinzudosiert. Somit betrug der Gehalt an Titanoxid, -hydroxid und/oder Titanoxidhdrat, bestimmt über RFA als Titandioxid 30 Gew.-%, bezogen auf das Gesamtgewicht des Pigments.

Vergleichsbeispiel 3

Iriodin 6123 Icy White Satin (Fa. Merck, Perlglanzpigment basierend auf synthetischen Glimmerplättchen, $D_{50}$ = 17 $\mu$m.

Vergleichsbeispiel 4

Hombikat UV 100 (Fa. Sachtleben, nanoskaliges (< 10nm) UV aktives $TiO_2$ Pigment in Anatasmodifikation).

**II Physikalische Charakterisierung der erfindungsgemäßen Pigmente und Pigmente der Vergleichsbeispiele**

**IIa Teilchengrößenmessung**

Die Größenverteilungskurve der plättchenförmigen oder sphärischen nichtmetallischen Substrate, der erfindungsgemäßen Pigmente sowie der Pigmente der Vergleichsbeispiele wurde mit dem Gerät Mastersizer 2000 (Fa. Malvern) gemäß Herstellerangaben bestimmt. Hierzu wurden ca. 0,1 g des entsprechenden Substrats bzw. Pigments als wässrige Suspension, ohne Zusatz von Dispergierhilfsmitteln, unter ständigem Rühren mittels einer Pasteurpipette in die Probenvorbereitungszelle des Messgerätes gegeben und mehrmals vermessen. Aus den einzelnen Messergebnissen wurden die Mittelwerte gebildet. Die Auswertung der Streulichtsignale erfolgte dabei nach der Fraunhofer Methode.

Unter der mittleren Teilchengröße $D_{50}$ wird im Rahmen dieser Erfindung der $D_{50}$-Wert der Summenhäufigkeitsverteilung der volumengemittelten Größenverteilungsfunktion, wie sie durch Laserbeugungsmethoden erhalten werden, verstanden. Der $D_{50}$-Wert gibt an, dass 50 % der Pigmente bzw. der plättchenförmigen oder sphärischen nichtmetallischen Substrate einen Durchmesser aufweisen, der gleich oder kleiner als der angegebene Wert, beispielsweise 20 $\mu$m, ist. Entsprechend gibt der $D_{90}$-Wert an, dass 90 % der Pigmente bzw. der plättchenförmigen oder sphärischen nichtmetallischen Substrate einen Durchmesser aufweisen, der gleich oder kleiner als der jeweilige Wert ist. Weiterhin gibt der $D_{10}$-Wert an, dass 10 % der Pigmente bzw. der plättchenförmigen oder sphärischen nichtmetallischen Substrate einen Durchmesser aufweisen, der gleich oder kleiner als der jeweilige Wert ist.

**IIb Bestimmung des Glühverlustes**

Der Glühverlust der Pigmente wurde mit Hilfe eines Muffelofens bei 850°C bestimmt. Hierzu wurde das Pigment in einen bereits vorgeglühten Glühtiegel eingewogen und 1h bei 850°C beheizt. Anschließend wurde nach Abkühlung im Exsikkator der Gewichtsverlust in Prozent ermittelt.

Tabelle 1: Glühverlust

| Beispiel | Glühverlust [%] |
|---|---|
| Beispiel 2 | 4,2 |
| Beispiel 4 | 2,7 |
| Beispiel 8 | 3,0 |
| Vergleichsbeispiel 1 | 0,5 |
| Vergleichsbeispiel 3 | 0,4 |

**IIc Rasterelektronenmikroskopische Aufnahmen**

Die Bestimmung der mittleren Dicke der plättchenförmigen nichtmetallischen Substrate, sowie die Schichtdicke(n) der erfindungsgemäßen Pigmente sowie der Pigmente der Vergleichsbeispiele erfolgte anhand von Querschliffen rasterelektronenmikroskopischer Aufnahmen mit dem Rasterelektronenmikroskop Supra 35 (Fa. Zeiss). Hierzu wurde ein in der Elektronenmikroskopie übliches Harz, beispielsweise TEMPFIX (Gerhard Neubauer Chemikalien) auf einen Probenteller aufgebracht und auf einer Heizplatte bis zum Erweichen erhitzt. Nachfolgend wurde der Probenteller von der Heizplatte genommen und das jeweilige Pigment auf das erweichte Harz gestreut. Nach Abkühlung des Harzes waren die jeweiligen Pigmente fast senkrecht stehend im Harz fixiert. Bei der rasterelektronischen Vermessung wurde der azimuthale Winkel $\alpha$ der im Harz fixierten Substrate bzw. Pigmente zu einer zur Oberfläche normalen Ebene geschätzt und bei der Dickenauswertung gemäß $h = h_{mess}/\cos \alpha$ berücksichtigt. Zur Bestimmung der mittleren Dicke h wurden mindestens 100 Teilchen der Substrate, der erfindungsgemäßen Pigmente bzw. der Pigmente der Vergleichsbeispiele herangezogen.

**IId Bestimmung der spezifischen Oberfläche nach BET**

Zur Bestimmung der spezifischen Oberfläche nach BET (Gerät: BELsorp mini II, Firma BEL) wurden die erfindungsgemäßen Pigmente bzw. Pigmente der Vergleichsbeispiele 2 h lang bei 300°C beheizt und anschließend der Bestimmung, welche mittels flüssigem Stickstoff erfolgte, zugeführt.

**IIe Röntgenfluoreszenzanalyse (RFA)**

Die Metalloxid-, Metallhydroxid-, und/oder Metalloxidhydratgehalte der erfindungsgemäßen Pigmente sowie der Pigmente der Vergleichsbeispiele wurden als entsprechende Oxidgehalte mittels Röntgenfluoreszenzanalyse (RFA) bestimmt.
Hierzu wurde das Pigment in eine Lithiumtetraboratglastablette eingearbeitet, in Festprobenmessbechern fixiert und daraus vermessen. Als Messgerät diente das Gerät Advantix ARL, Fa. Thermo Scientific.

Tabelle 2: Teilchengröße, Metalloxidgehalt, spezifische Oberfläche nach BET, Quotient aus spezifischer Oberfläche nach BET zu $D_{50}$, Schichtdicke der Titanoxid, -hydroxid und/oder -oxidhydratschicht

| Beispiel/Vergleichsbeispiel | Teilchengröße | | | RFA [%] | | BET | BET/$D_{50}$ |
|---|---|---|---|---|---|---|---|
| | $D_{10}$ | $D_{50}$ | $D_{90}$ | $TiO_2$ | $Ce_2O_3$ | [$m^2$/g] | [m/g] |
| Beispiel 1 | 11,4 | 22,4 | 40,0 | 9,6 | 0,2 | 31,1 | $1,39 \cdot 10^6$ |
| Beispiel 2 | 10,3 | 21,7 | 41,5 | 9,9 | 0,1 | 36,2 | $1,67 \cdot 10^6$ |
| Beispiel 3 | 16,7 | 33,2 | 58,6 | 5,1 | 0,2 | /// | /// |
| Beispiel 4 | 11,7 | 22,6 | 40,3 | 13,2 | 0,1 | 23,3 | $1,03 \cdot 10^6$ |
| Beispiel 5 | 6,4 | 13,8 | 26,9 | 9,6 | 0,2 | 34,8 | $2,52 \cdot 10^6$ |
| Beispiel 6 | 4,9 | 10,4 | 20,2 | 9,4 | 0,2 | 35,8 | $3,43 \cdot 10^6$ |
| Beispiel 7 | 1,0 | 4,6 | 8,2 | ///- | /// | 2,7 | $5,87 \cdot 10^5$ |
| Beispiel 8 | 11,7 | 23,1 | 41,4 | 10,5 | 0,3 | 32,5 | $1,41 \cdot 10^6$ |
| Vergleichsbeispiel 1 | 9,3 | 20,1 | 39,0 | 29,4 | 0,3 | 6,9 | $2,81 \cdot 10^5$ |
| Vergleichsbeispiel 2 | 11,6 | 22,5 | 40,1 | 23,0 | 0,1 | 33,5 | $3,43 \cdot 10^5$ |
| Vergleichsbeispiel 3 | 9,1 | 17,4 | 33,0 | 27,6 | <0,01 | 3,7 | $1,49 \cdot 10^6$ |

**IIf Deckfähigkeit / Bestimmung des Deckungsquotienten**

Die Deckfähigkeit der erfindungsgemäßen Pigmente und Pigmente der Vergleichsbeispiele wurde anhand von Lackapplikationen auf Schwarz-Weiß-Deckungskarten (Byko Chart 2853, Fa. Byk Gardner) bestimmt. Das jeweilige Pigment wurde in einer Pigmentierungshöhe von 6 Gew.-%, bezogen auf das Gesamtgewichtes des Nasslacks, in einen konventionellen Nitrocelluloselack (Dr. Renger Erco Bronzemischlack 2615e; Fa. Morton) eingerührt. Dabei wurde das jeweilige Pigment vorgelegt und anschließend mit einem Pinsel in den Lack dispergiert. Der fertige Lack wurde auf einem Rakelabzugsgerät mit einer Nassfilmdicke von 100 μm auf den Schwarz-Weiß-Deckungskarten appliziert. Die Helligkeitswerte L* wurden bei einer Messgeometrie von 110°, relativ zum Ausfallwinkel des bei 45° eingestrahlten Lichts, anhand dieser Lackapplikationen auf dem schwarzem und auf dem weißem Hintergrund der Schwarz-Weiß-Deckungskarte mit dem Gerät BYKmac, Fa. Byk Gardner, vermessen.
Durch Bildung des Deckungsquotienten Dq lassen sich vom Untergrund unabhängige Maßzahlen für die Deckfähigkeit der Pigmente ermitteln. Hierzu wird der Quotient der Helligkeitswerte auf schwarzem Hintergrund zu den Helligkeitswerten auf weißem Hintergrund der Schwarz-Weiß-Deckungskarte berechnet:

$$Dq = \frac{L*_{110,schwarz}}{L*_{110,weiß}}$$

Bei Verwendung identischer Lacksysteme erlaubt der Deckungsquotient den Vergleich der Deckfähigkeit von verschiedenen Pigmenten zueinander.

Je mehr sich der Wert des Deckungsquotienten Dq dem Wert 0 nähert, desto transparenter erscheint das entsprechende Pigment einem Betrachter bei identischer Pigmentierungshöhe in Gew.-%. Im Rahmen dieser Erfindung wurde als Kriterium für eine vollständige Transparenz ein Wert von Dq < 0,5 für Pigmente basierend auf plättchenförmigen Substraten definiert. Wie Tabelle 3 zu entnehmen ist, liegen die Dq-Werte der erfindungsgemäßen Pigmente basierend auf plättchenförmigen Substraten bei < 0,5, und sind somit vom Betrachter kaum wahrzunehmen. Bei dem erfindungsgemäßen Pigment aus Beispiel 7, welches auf einem sphärischen Substrat basiert, wurde ein höherer Deckungsquotient aufgrund der bereits hohen Lichtstreuung des verwendeten sphärischen Substrats gefunden.

Generell lässt sich sagen, dass durch die Beschichtung der Substrate der Deckungsquotient im Vergleich zum Ausgangsmaterial nicht mehr als um das Doppelte zunimmt.

**IIg Glanzmessungen**

Der Glanz ist ein Maß für die gerichtete Reflexion und lässt sich mittels eines Micro-Tri-Gloss-Gerätes genau charakterisieren. Stärker streuende Proben sollten aufgrund von vermehrter Kantenstreuung sowie Pigmentunebenheiten einen niedrigen Glanz aufweisen. Es wurden die Lackapplikationen aus IIf "Deckungsquotient" auf Schwarz-Weiß-Deckungskarten (Byko Chart 2853, Fa. Byk Gardner) mit Hilfe eines Micro-Tri-Gloss Glanzmessgerätes, Fa. Byk Gardner, auf schwarzem Untergrund bei einem Messwinkel von 20° bezogen auf die Vertikale vermessen. Die Glanzwerte der erfindungsgemäßen Pigmente und Pigmente der Vergleichsbeispiele ist Tabelle 3 zu entnehmen.

Tabelle 3: Deckungsquotient und Glanz

| Beispiel/Vergleichsbeispiel | Deckungsquotient Dq | Glanz, 20° |
|---|---|---|
| Nullmessung Schwarz-Weiß-Deckungskarte | 0,10 | 54,0 |
| Nullmessung Schwarz-Weiß-Deckungskarte und Nitrocellulose | - | 59,1 |
| Mikro-Glasholhkugeln S32 (Fa. 3M) | 0,45 | 7,1 |
| Synthetische Glimmerplättchen (FM1040, Fa. Jhejan, China) | 0,20 | 3,3 |
| Beispiel 1 | 0,38 | 2,6 |
| Beispiel 2 | 0,39 | 2,0 |
| Beispiel 3 | 0,28 | 2,4 |
| Beispiel 4 | 0,48 | 4,0 |
| Beispiel 5 | 0,36 | 1,2 |
| Beispiel 6 | 0,36 | 1,0 |
| Beispiel 7 | 0,63 | 0,9 |
| Beispiel 8 | 0,33 | 0,9 |
| Vergleichsbeispiel 1 | 0,82 | 6,7 |
| Vergleichsbeispiel 2 | 0,65 | 5,7 |
| Vergleichsbeispiel 3 | 0,79 | 5,9 |

**IIh Farb- und Chromamessungen**

Die Farb- und Chromawerte der erfindungsgemäßen Pigmente sowie der Pigmente der Vergleichsbeispiele wurden anhand der Lackapplikationen aus IIf Deckungsquotient mit Hilfe des Spektralphotometers CM700d, Fa. Konica Minolta, unter D65 Normlicht SCE-Modus bestimmt. Die entsprechenden Werte sind Tabelle 2 zu entnehmen, wobei dE den Unterschied zur Schwarz-Weiß-Deckungskarte darstellt.

Tabelle 4: L*a*b*- und Chromawerte

| Beispiel/Vergleichsbeispiel | Untergrun d | L* (D65) | a* (D65 ) | b* (D65) | C* (D65 ) | h (D65 ) | dE |
|---|---|---|---|---|---|---|---|
| Nullmessung Schwarz-Weiß-Deckungskarte | weiß | 91,9 | 0,2 | -2,0 | 2,0 | 276, 1 | 0,0 |
| | schwarz | 9,1 | -0,1 | -0,7 | 0,7 | 258, 7 | 0,0 |
| Mikro-Glasholhkugeln S32 (Fa. 3M) | weiß | 92,2 | 0,2 | -1,3 | 1,3 | 280, 1 | 0,8 |
| | schwarz | 41,8 | -0,1 | -0,7 | 0,7 | 260, 8 | 32,7 |
| Synthetische Glimmerplättchen (FM1040, Fa. Jhejan, China) | weiß | 92,2 | 0,2 | -1,6 | 1,6 | 276, 0 | 0,5 |
| | schwarz | 18,5 | 0,0 | -0,3 | 0,3 | 265, 7 | 9,5 |
| Beispiel 1 | weiß | 91,9 | 0,0 | -0,3 | 0,3 | 269, 5 | 1,7 |
| | schwarz | 35,2 | -0,4 | -9,8 | 9,8 | 267, 5 | 27,7 |
| Beispiel 2 | weiß | 90,4 | 0,2 | 1,7 | 1,8 | 83,8 | 4,0 |
| | schwarz | 34,8 | 0,0 | -8,9 | 8,9 | 269, 9 | 27,0 |
| Beispiel 3 | weiß | 92,3 | 0,1 | -0,9 | 0,9 | 273, 0 | 1,2 |
| | schwarz | 25,8 | 0,0 | -5,2 | 5,2 | 270, 4 | 17,3 |
| Beispiel 4 | weiß | 91,2 | 0,1 | 0,1 | 0,1 | 21,9 | 2,1 |
| | schwarz | 43,8 | -1,2 | -11,2 | 11,3 | 264, 0 | 36,3 |
| Beispiel 5 | weiß | 92,6 | 0,1 | -1,0 | 1,0 | 273, 4 | 1,3 |
| | schwarz | 33,7 | 0,1 | -7,4 | 7,4 | 270, 9 | 25,5 |
| Beispiel 6 | weiß | 92,8 | 0,1 | -1,0 | 1,0 | 274, 4 | 1,4 |
| | schwarz | 33,1 | -0,3 | -7,1 | 7,1 | 267, 4 | 24,8 |
| Beispiel 7 | weiß | 92,3 | -0,1 | 0,0 | 0,1 | 172, 5 | 2,1 |
| | schwarz | 58,0 | -1,0 | -4,3 | 4,4 | 257, 4 | 49,0 |
| Beispiel 8 | weiß | 92,7 | -0,1 | -0,4 | 0,4 | 251, 1 | 1,8 |
| | schwarz | 30,2 | -0,1 | -1,7 | 1,7 | 265, 5 | 21,1 |
| Vergleichsbeispiel 1 | weiß | 89,0 | -0,1 | 2,9 | 2,9 | 91,9 | 5,7 |
| | schwarz | 72,8 | -2,1 | -4,5 | 5,0 | 245, 5 | 63,9 |
| Vergleichsbeispiel 2 | weiß | 90,3 | 0,1 | -0,2 | 0,2 | 303, 0 | 2,4 |
| | schwarz | 58,5 | -2,1 | -5,2 | 5,6 | 247, 9 | 49,6 |
| Vergleichsbeispiel 3 | weiß | 90,5 | 0,0 | 1,3 | 1,3 | 91,8 | 3,6 |
| | schwarz | 71,7 | -2,0 | -5,0 | 5,4 | 247, 7 | 62,8 |

Die erfindungsgemäßen Pigmente erwiesen sich als äußerst unbunt. Dies äußerte sich in einem Chroma von < 12. Zwar besitzen auch herkömmliche, silberfarbene Interferenzpigmente ein ebenso geringes Chroma, treten jedoch aufgrund ihres hohen Glanzes bei der visuellen Betrachtung deutlich in Erscheinung. Dies lässt sich messtechnisch anhand des hohen Deckungsquotienten sowie der höheren Glanzwerte bei 20° darstellen.

**IIi UV-Beständigkeit an Rakelabzügen**

Dieser Test wurde in Anlehnung an den in der EP 0 870 730 beschrieben UV-Schnelltest zur Bestimmung der photochemischen UV-Aktivität von TiO$_2$-Pigmenten durchgeführt. Hierzu wurden jeweils 1,0 g der erfindungsgemäßen Pigmente bzw. der Pigmente der Vergleichsbeispiele in 9,0 g eines doppelbindungsreichen melaminhaltigen Lackes eindispergiert. Es wurden Rakelabzüge auf Schwarz-Weiß-Deckungskarten (Byko Chart 2853, Fa. Byk Gardner) angefertigt und diese bei Raumtemperatur getrocknet. Die Rakelabzüge wurden geteilt und jeweils einer der beiden Abschnitte als unbelastetes Vergleichsmuster im Dunkeln gelagert. Anschließend wurden die Proben 150 min lang in einem QUV-Gerät der Fa. Q-Panel mit UV-haltigem Licht (UVA-340 Lampe, Bestrahlungsstärke 1,0 W/m$^2$/nm) bestrahlt. Unmittelbar nach dem Testende wurden mit einem Farbmessgerät CM-508i der Fa. Minolta Farbwerte der belasteten Prüflinge relativ zum jeweiligen Rückstellmuster ermittelt. Die resultierenden ΔE*-Werte sind, nach der Hunter-L*a*b*-Formel berechnet, in Tabelle 5 dargestellt.

In diesem Test wird im Wesentlichen eine graublaue Verfärbung der TiO$_2$-Schicht des Pigments aufgrund von unter UV-Lichteinfluss gebildeten Ti(III)-Zentren beobachtet. Bedingung hierfür ist, dass das Elektronenloch das TiO$_2$ räumlich verlassen hat und - etwa durch Reaktion mit olefinischen Doppelbindungen des Bindemittels - nicht unmittelbar wieder mit dem verbliebenen Elektron rekombinieren kann. Da eine melaminhaltige Lackschicht die Diffusion von Wasser(dampf) und Sauerstoff an die Pigmentoberfläche signifikant verlangsamt, findet eine Reoxidation der Titan(III)-Zentren deutlich verzögert statt, so dass die Vergrauung gemessen und der ΔE-Wert als Maß für die UV-Stabilität der Pigmente herangezogen werden kann. Ein größerer ΔE*-Zahlenwert der belasteten Probe relativ zum unbelasteten Rückstellmuster bedeutet somit eine geringere UV-Stabilität des untersuchten Pigments.

Tabelle 5

| Beispiel/Vergleichsbeispiel | ΔE* |
|---|---|
| Beispiel 1 | 5,6 |
| Beispiel 2 | 4,2 |
| Beispiel 4 | 4,6 |
| Beispiel 5 | 7,8 |
| Beispiel 6 | 7,3 |
| Beispiel 7 | 5,0 |
| Beispiel 8 | 5,9 |
| Vergleichsbeispiel 1 | 1,4 |
| Vergleichsbeispiel 2 | 2,5 |
| Vergleichsbeispiel 3 | 4,3 |

**IIj Bestimmung des Bindemittelabbaus sowie der photokatalytischen Aktivität**

Die erfindungsgemäßen Pigmente sowie die Pigmente der Vergleichsbeispiele wurden zu 5 Gew.-%ig bezogen auf das Gesamtgewicht des Lackansatzes in die handelsübliche, transparente Holzschutzlackierung für den Außenbereich Gori 66 Allround Holzlasur, Fa. Dyrup, eingearbeitet.

Die pigmentierten Holzschutzlacke wurden auf jeweils auf zwei Aluminiumblechen mittels einer Spiralrakel in 100 μm Nassfilmdicke appliziert und 1 Woche getrocknet/ausgehärtet. Eines der beschichteten Aluminiumbleche wurde in einer QUV-Kammer, Fa. Q-Lab, mit alternierendem Zyklus von 4h UV-Belichtung und 4h Betauung für 300h und 800h gegeben. Zur Messung der Selbstreinigung wurden 1 Tropfen einer Methylenblaulösung mit einem Gehalt von 250 μmol/L auf die Oberfläche der bei 300 h und 800 h belichteten Aluminiumbleche gegeben. Nachdem die Lösung eingetrocknet war, wurden die Bleche in die QUV-Testkammer gegeben und mit alternierendem Zyklus von 4 h UV-Belichtung und 4 h Betauung der Belichtung ausgesetzt. Nach 24h und nach 48h wurden die Bleche visuell dahingehend begutachtet, wie stark das Methylenblau vom Lackfilm abgebaut wurde. Als Kontrollblech wurde ein unter identischen Bedingungen mit dem unpigmentierten Holzschutzlack beschichtetes Aluminiumblech eingesetzt, welches unter identischen Bedingungen in der QUV-Kammer behandelt wurde.

Die Ergebnisse sind in Tabelle 6 angegeben.

Tabelle 6

| Beispiel/ Vergleichsbeispiel | Nach 300h Exposition | | | Nach 800h Exposition | |
|---|---|---|---|---|---|
| | Ohne MB | MB n. 24 h | MB n. 48 h | Ohne MB | MB n. 24h |
| Kontrollblech | 0 | 0 | 0 | 0 | 0 |
| Beispiel 1 | 0 | 2 | 2 | - | 2 |
| Beispiel 4 | - | 2 | 3 | - | 3 |

(fortgesetzt)

| Beispiel/ Vergleichsbeispiel | Nach 300h Exposition | | | Nach 800h Exposition | |
|---|---|---|---|---|---|
| | Ohne MB | MB n. 24 h | MB n. 48 h | Ohne MB | MB n. 24h |
| Beispiel 6 | - | 2 | 2 | - | 2 |
| Beispiel 8 | - | 1 | 2 | - | 2 |
| Vergleichsbeispiel 1 | 0 | 1 | 1 | 0 | 1 |
| Vergleichsbeispiel 3 | -- | 2 | 3 | --- | Lackfilm zu stark beschädigt |
| Vergleichsbeispiel 4 | Lackfilm zu stark beschädigt | | | Nicht mehr durchgeführt | |
| MB = Methylenblau<br>Entfärbungsskala: Lackabbau 0 = keine Entfärbung o = kein Lackabbau 1 = leichte Entfärbung - = leichter Lackabbau<br>2 = gute Entfärbung -- = starker Lackabbau 3 = sehr gute Entfärbung --- = sehr starker Lackabbau | | | | | |

Den Ergebnissen aus Tabelle 6 ist zu entnehmen, dass die erfindungsgemäßen Pigmente nach 300 h sowie nach 800 h UV-Licht-Exposition den Lackfilm nur gering angegriffen bzw. abgebaut haben. Das zugesetzte Methylenblau wurde dagegen nahezu vollständig abgebaut.

Im Vergleich dazu weist ein herkömmliches $TiO_2$-belegtes Perlglanzpigment, wie z. B. das Pigment aus Vergleichsbeispiel 3, eine derart starke Photoaktivität auf, dass neben dem Methylenblau auch der Lackfilm sehr stark in Mitleidenschaft gezogen wird. Das Pigment kann also nicht zwischen "Freund und Feind" unterscheiden und bewirkt einen Abbau der das Pigment umgebenden organischen Verbindungen.

Noch deutlicher wurde der starke Bindemittelabbau des Lackfilms bei den extrem photoaktiven $TiO_2$ Partikeln aus Vergleichsbeispiel 4, welche üblicherweise in anorganischen Bindemittelsystemen, wie beispielsweise silikatischen Wandfarben, Verwendung finden.

Bei Vergleichsbeispiel 1 handelt es sich um ein wetterstabilisiertes $TiO_2$-haltiges Perlglanzpigment. Dieses schont den Lackfilm am besten, so dass selbst nach 800 h Exposition ist kein Bindemittelabbau feststellbar war. Jedoch konnte dieses Pigment zugesetztes Methylenblau nicht abbauen.

**Patentansprüche**

1.   Pigmente mit nichtmetallischem Substrat,
     **dadurch gekennzeichnet,**
     **dass** die Pigmente wenigstens eine selektiv Licht und/oder Elektronen absorbierende Barriereschicht und wenigstens eine photokatalytisch aktive Schicht mit oder aus Titanoxid, Titanhydroxid und/oder Titanoxidhydrat aufweisen, wobei die mittlere Schichtdicke der photokatalytisch aktiven Schicht bei ≤ 40 nm liegt, wobei die wenigstens eine Barriereschicht zwischen dem nichtmetallischen Substrat und der wenigstens einen photokatalytisch aktiven Schicht angeordnet ist, wobei die Barriereschicht Metalloxid, Metallhydroxid und/oder Metalloxidhydrat aufweist oder daraus besteht, wobei das Metall aus der Gruppe, die aus Cer, Zink und Mischungen davon besteht, ausgewählt wird.

2.   Pigmente mit nichtmetallischem Substrat nach Anspruch 1,
     **dadurch gekennzeichnet,**
     **dass** die wenigstens eine photokatalytisch aktive Schicht die äußerste anorganische Schicht ist.

3.   Pigmente mit nichtmetallischem Substrat nach einem der vorherigen Ansprüche, **dadurch gekennzeichnet,**
     **dass** die photokatalytisch aktive Schicht aus der Gruppe, die aus Titanoxid, Titanhydroxid, Titanoxidhydrat und Mischungen davon besteht, ausgewählt wird.

4.   Pigmente mit nichtmetallischem Substrat nach einem der vorherigen Ansprüche, **dadurch gekennzeichnet,**
     **dass** die photokatalytisch aktive Schicht einen Gewichtsanteil aus einem Bereich von 2 bis weniger als 30 Gew.-%, bezogen auf das Gesamtgewicht der Pigmente, aufweist.

5.   Pigmente mit nichtmetallischem Substrat nach einem der vorherigen Ansprüche, **dadurch gekennzeichnet,**
     **dass** die Barriereschicht einen Gewichtsanteil aus einem Bereich von 0,1 bis weniger als 5 Gew.-%, bezogen auf das Gesamtgewicht der Pigmente, aufweist.

6. Pigmente mit nichtmetallischem Substrat nach einem der vorherigen Ansprüche, **dadurch gekennzeichnet, dass** die photokatalytisch aktive Schicht eine mittlere Schichtdicke aus einem Bereich von 5 bis 40 nm aufweist.

7. Pigmente mit nichtmetallischem Substrat nach einem der vorherigen Ansprüche, **dadurch gekennzeichnet, dass** das nichtmetallische Substrat sphärisch oder plättchenförmig ist.

8. Pigmente mit nichtmetallischem Substrat nach einem der vorherigen Ansprüche, **dadurch gekennzeichnet, dass** die Pigmente sphärisch sind und einen mittleren Durchmesser $D_{50}$ aus einem Bereich von 10 bis 100 $\mu$m aufweisen.

9. Pigmente mit nichtmetallischem Substrat nach einem der vorherigen Ansprüche, **dadurch gekennzeichnet, dass** die Pigmente plättchenförmig sind und einen mittleren Durchmesser $D_{50}$ aus einem Bereich von 2 bis 65 $\mu$m aufweisen.

10. Pigmente mit nichtmetallischem Substrat nach einem der vorherigen Ansprüche, **dadurch gekennzeichnet, dass** zwischen der wenigstens einen Barriereschicht und der wenigstens einen photokatalytisch aktiven Schicht wenigstens eine weitere anorganische Schicht angeordnet ist.

11. Pigmente mit nichtmetallischem Substrat nach einem der vorherigen Ansprüche, **dadurch gekennzeichnet, dass** die wenigstens eine weitere anorganische Schicht einen Gewichtsanteil aus einem Bereich von 0,1 bis weniger als 10 Gew.-%, bezogen auf das Gesamtgewicht der Pigmente, aufweist.

12. Pigmente mit nichtmetallischem Substrat nach einem der vorherigen Ansprüche, **dadurch gekennzeichnet, dass** die photokatalytisch aktive Schicht organisch-chemisch modifiziert ist.

13. Pigmente mit nichtmetallischem Substrat nach einem der vorherigen Ansprüche, **dadurch gekennzeichnet, dass** das nichtmetallische Substrat plättchenförmig ist, vorzugsweise natürliche oder synthetische Glimmerplättchen oder Glasplättchen, und eine Beschichtung aufweist, wobei die Beschichtung ausgehend vom Substrat aus den folgenden Schichten besteht:

    (a) Metalloxid(en), -hydroxid(en) und/oder Metalloxidhydrat(en) von Cer mit einem Gehalt aus einem Bereich von 0,1 bis 1,4 Gew.-%, bezogen auf das Gesamtgewicht des Pigments,
    (b) Metalloxid(en), -hydroxid(en) und/oder Metalloxidhydrat(en) von Silizium mit einem Gehalt aus einem Bereich von 0,4 bis 2,2 Gew.-%, bezogen auf das Gesamtgewicht des Pigments,
    (c) Metalloxid(en), -hydroxid(en) und/oder Metalloxidhydrat(en) von Titan, mit einem Gehalt aus einem Bereich von 5,2 bis 24,0 Gew.-%, bezogen auf das Gesamtgewicht des Pigments sowie
    (d) optional einer organisch-chemischen Oberflächenmodifizierung.

14. Pigmente mit nichtmetallischem Substrat nach einem der vorherigen Ansprüche, **dadurch gekennzeichnet, dass** das nichtmetallische Substrat plättchenförmig ist, vorzugsweise natürliche oder synthetische Glimmerplättchen oder Glasplättchen, und eine Beschichtung aufweist, wobei die Beschichtung ausgehend vom Substrat aus den folgenden Schichten besteht:

    (a) Metalloxid(en), -hydroxid(en) und/oder Metalloxidhydrat(en) von Zink mit einem Gehalt aus einem Bereich von 0,3 bis 2,9 Gew.-%, bezogen auf das Gesamtgewicht des Pigments,
    (b) Metalloxid(en), -hydroxid(en) und/oder Metalloxidhydrat(en) von Silizium mit einem Gehalt aus einem Bereich von 0,4 bis 2,5 Gew.-%, bezogen auf das Gesamtgewicht des Pigments,
    (c) Metalloxid(en), -hydroxid(en) und/oder Metalloxidhydrat(en) von Titan, mit einem Gehalt aus einem Bereich von 4,9 bis 22,5 Gew.-%, bezogen auf das Gesamtgewicht des Pigments sowie
    (d) optional einer organisch-chemischen Oberflächenmodifizierung.

15. Beschichtungsmittel,
    **dadurch gekennzeichnet,**
    **dass** das Beschichtungsmittel Pigmente gemäß einem der vorhergehenden Ansprüche aufweist.

16. Verfahren zum Herstellen von Pigmenten gemäß einem der Ansprüche 1 bis 14, **dadurch gekennzeichnet,**

**dass** das Verfahren folgende Schritte umfasst,

(a) Beschichten eines nichtmetallischen Substrates mit wenigstens einer Barriereschicht,
(b) Beschichten des mit wenigstens einer Barriereschicht versehenen nichtmetallischen Substrates mit wenigstens einer photokatalytisch aktiven Schicht.

## Claims

1.  Pigments having a non-metallic substrate,
    **characterised in that**
    the pigments comprise at least one barrier layer which selectively absorbs light and/or electrons and at least one photocatalytically active layer comprising or containing titanium oxide, titanium hydroxide and/or titanium oxide hydrate, the mean thickness of the photocatalytically active layer being $\leq 40$ nm,
    and the at least one barrier layer is disposed between the non-metallic substrate and the at least one photocatalytically active layer, and the barrier layer contains or comprises metal oxide, metal hydroxide and/or metal oxide hydrate, the metal being selected from the group comprising cerium, zinc and mixtures thereof.

2.  Pigments having a non-metallic substrate as claimed in claim 1, **characterised in that**
    the at least one photocatalytically active layer is the outermost inorganic layer.

3.  Pigments having a non-metallic substrate as claimed in one of the preceding claims,
    **characterised in that**
    the photocatalytically active layer is selected from the group comprising titanium oxide, titanium hydroxide, titanium oxide hydrate and mixtures thereof.

4.  Pigments having a non-metallic substrate as claimed in one of the preceding claims,
    **characterised in that**
    the photocatalytically active layer comprises a proportion by weight in a range of 2 to less than 30 % by weight, relative to the total weight of the pigments.

5.  Pigments having a non-metallic substrate as claimed in one of the preceding claims,
    **characterised in that**
    the barrier layer comprises a proportion by weight in a range of 0.1 to less than 5 % by weight, relative to the total weight of the pigments.

6.  Pigments having a non-metallic substrate as claimed in one of the preceding claims,
    **characterised in that**
    the photocatalytically active layer has a mean layer thickness in a range of 5 to 40 nm.

7.  Pigments having a non-metallic substrate as claimed in one of the preceding claims,
    **characterised in that**
    the non-metallic substrate is spherical or platelet-shaped.

8.  Pigments having a non-metallic substrate as claimed in one of the preceding claims,
    **characterised in that**
    the pigments are spherical and have a mean diameter $D_{50}$ in a range of 10 to 100 $\mu$m.

9.  Pigments having a non-metallic substrate as claimed in one of the preceding claims,
    **characterised in that**
    the pigments are platelet-shaped and have a mean diameter $D_{50}$ in a range of 2 to 65 $\mu$m.

10. Pigments having a non-metallic substrate as claimed in one of the preceding claims,
    **characterised in that**
    at least one other inorganic layer is disposed between the at least one barrier layer and the at least one photocatalytically active layer.

11. Pigments having a non-metallic substrate as claimed in one of the preceding claims,

**characterised in that**
the at least one other inorganic layer has a proportion by weight in a range of 0.1 to less than 10% by weight, relative to the total weight of the pigments.

**12.** Pigments having a non-metallic substrate as claimed in one of the preceding claims,
**characterised in that**
the photocatalytically active layer is organic-chemically modified.

**13.** Pigments having a non-metallic substrate as claimed in one of the preceding claims,
**characterised in that**
the non-metallic substrate is platelet-shaped, preferably natural or synthetic mica platelets or glass platelets, and has a coating and, starting from the substrate, the coating comprises the following layers:

(a) metal oxide(s), hydroxide(s) and/or metal oxide hydrate(s) of cerium with a content in a range of 0.1 to 1.4 % by weight, relative to the total weight of the pigment,
(b) metal oxide(s), hydroxide(s) and/or metal oxide hydrate(s) of silicon with a content in a range of 0.4 to 2.2 % by weight, relative to the total weight of the pigment,
(c) metal oxide(s), hydroxide(s) and/or metal oxide hydrate(s) of titanium with a content in a range of 5.2 to 24.0 % by weight, relative to the total weight of the pigment,
and
(d) optionally an organic-chemically modified surface modification.

**14.** Pigments having a non-metallic substrate as claimed in one of the preceding claims,
**characterised in that**
the non-metallic substrate is platelet-shaped, preferably natural or synthetic mica platelets or glass platelets, and has a coating and, starting from the substrate, the coating comprises the following layers:

(a) metal oxide(s), hydroxide(s) and/or metal oxide hydrate(s) of zinc with a content in a range of 0.3 to 2.9 % by weight, relative to the total weight of the pigment,
(b) metal oxide(s), hydroxide(s) and/or metal oxide hydrate(s) of silicon with a content in a range of 0.4 to 2.5 % by weight, relative to the total weight of the pigment,
(c) metal oxide(s), hydroxide(s) and/or metal oxide hydrate(s) of titanium with a content in a range of 4.9 to 22.5 % by weight, relative to the total weight of the pigment,
and
(d) optionally an organic-chemically modified surface modification.

**15.** Coating agent,
**characterised in that**
the coating agent contains pigments as claimed in one of the preceding claims.

**16.** Method of producing pigments as claimed in one of claims 1 to 14, **characterised in that**
the method comprises the following steps:

(a) coating a non-metallic substrate with at least one barrier layer,
(b) coating the non-metallic substrate provided with at least one barrier layer with at least one photocatalytically active layer.

**Revendications**

**1.** Pigments à substrat non-métallique, **caractérisés en ce que** les pigments comprennent au moins une couche barrière absorbant sélectivement la lumière et/ou les électrons, et au moins une couche photocatalytiquement active, contenant de l'oxyde de titane, de l'hydroxyde de titane et/ou l'hydroxyde de titanyle, ou en sont constitués, l'épaisseur moyenne de couche de la couche photocatalytiquement active étant ≤ 40 nm, la ou les couches barrière étant disposées entre le substrat non-métallique et la ou les couches photocatalytiquement actives, la couche barrière comprenant un oxyde métallique, un hydroxyde métallique et/ou un oxyde-hydroxyde métallique, ou en étant constituée, le métal étant choisi dans le groupe consistant en le cérium, le zinc et les mélanges de ceux-ci.

**2.** Pigments à substrat non-métallique selon la revendication 1, **caractérisés en ce que** la ou les couches photocatalytiquement actives sont la couche inorganique la plus extérieure.

**3.** Pigments à substrat non-métallique selon l'une des revendications précédentes, **caractérisés en ce que** la couche photocatalytiquement active est choisie dans le groupe consistant en l'oxyde de titane, l'hydroxyde de titane, l'hydroxyde de titanyle, et les mélanges de ceux-ci.

**4.** Pigments à substrat non-métallique selon l'une des revendications précédentes, **caractérisés en ce que** la couche photocatalytiquement active présente une proportion en poids, rapportée au poids total des pigments, comprise dans la plage de 2 à moins de 30 % en poids.

**5.** Pigments à substrat non-métallique selon l'une des revendications précédentes, **caractérisés en ce que** la couche barrière présente une proportion en poids, par rapport au poids total des pigments, comprise dans la plage de 0,1 à moins de 5 % en poids.

**6.** Pigments à substrat non-métallique selon l'une des revendications précédentes, **caractérisés en ce que** la couche photocatalytiquement active présente une épaisseur moyenne de couche comprise dans la plage de 5 à 40 nm.

**7.** Pigments à substrat non-métallique selon l'une des revendications précédentes, **caractérisés en ce que** le substrat non-métallique est sphérique ou lamellaire.

**8.** Pigments à substrat non-métallique selon l'une des revendications précédentes, **caractérisés en ce que** les pigments sont sphériques et présentent un diamètre moyen $D_{50}$ compris dans la plage de 10 à 100 $\mu$m.

**9.** Pigments à substrat non-métallique selon l'une des revendications précédentes, **caractérisés en ce que** les pigments sont lamellaires et présentent un diamètre moyen $D_{50}$ compris dans la plage de 2 à 65 $\mu$m.

**10.** Pigments à substrat non-métallique selon l'une des revendications précédentes, **caractérisés en ce qu'**entre la ou les couches barrière et la ou les couches photocatalytiquement actives est disposée une couche inorganique supplémentaire.

**11.** Pigments à substrat non-métallique selon l'une des revendications précédentes, **caractérisés en ce que** la ou les couches inorganiques supplémentaires présentent une proportion en poids, par rapport au poids total des pigments, comprise dans la plage de 0,1 à moins de 10 % en poids.

**12.** Pigments à substrat non-métallique selon l'une des revendications précédentes, **caractérisés en ce que** la couche photocatalytiquement active a subi une modification organochimique.

**13.** Pigments à substrat non-métallique selon l'une des revendications précédentes, **caractérisés en ce que** le substrat non-métallique est lamellaire, comprend de préférence des lamelles de mica ou des lamelles de verre naturelles ou synthétiques, et un revêtement, le revêtement étant constitué, en partant du substrat, des couches suivantes :

(a) d'un ou plusieurs oxydes, hydroxydes et/ou oxyde-hydroxydes métalliques de cérium, en une concentration comprise dans la plage de 0,1 à 1,4 % en poids par rapport au poids total du pigment,
(b) d'un ou plusieurs oxydes, hydroxydes et/ou oxyde-hydroxydes métalliques de silicium, en une concentration comprise dans la plage de 0,4 à 2,2 % en poids par rapport au poids total du pigment,
(c) d'un ou plusieurs oxydes, hydroxydes et/ou oxyde-hydroxydes métalliques de titane, en une concentration comprise dans la plage de 5,2 à 24,0 % en poids par rapport au poids total du pigment, ainsi que
(d) en option, d'une modification de surface organochimique.

**14.** Pigments à substrat non-métallique selon l'une des revendications précédentes, **caractérisés en ce que** le substrat non-métallique est lamellaire, comprend de préférence des lamelles de mica ou des lamelles de verre naturelles ou synthétiques, et un revêtement, le revêtement étant, à partir du substrat, constitué des couches suivantes :

(a) d'un ou plusieurs oxydes, hydroxydes et/ou oxyde-hydroxydes métalliques de zinc, en une concentration comprise dans la plage de 0,3 à 2,9 % en poids par rapport au poids total du pigment,
(b) d'un ou plusieurs oxydes, hydroxydes et/ou oxyde-hydroxydes métalliques de silicium, en une concentration comprise dans la plage de 0,4 à 2,5 % en poids par rapport au poids total du pigment,

**EP 2 917 286 B1**

(c) d'un ou plusieurs oxydes, hydroxydes et/ou oxyde-hydroxydes métalliques de titane, en une concentration comprise dans la plage de 4,9 à 22,5 % en poids par rapport au poids total du pigment, ainsi que
(d) en option, d'une modification en surface organochimique.

15. Composition de revêtement **caractérisée en ce que** la composition de revêtement comprend des pigments selon l'une des revendications précédentes.

16. Procédé de fabrication de pigments selon l'une des revendications 1 à 14, **caractérisé en ce que** le procédé comprend les étapes suivantes :

(a) revêtement d'un substrat non-métallique avec au moins une couche barrière,
(b) revêtement du substrat non-métallique, pourvu d'au moins une couche barrière, avec au moins une couche photocatalytiquement active.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008034510 A2
- DE 102006044076 A1
- US 20100322981 A1
- WO 2011095447 A2
- EP 1980594 B1
- EP 0289240 B1
- WO 2004056716 A1
- WO 2005063637 A1
- EP 0870730 A

**In der Beschreibung aufgeführte Nicht-Patentliteratur**

- *CHEMICAL ABSTRACTS,* 1344-09-8
- *CHEMICAL ABSTRACTS,* 7775-19-1
- *CHEMICAL ABSTRACTS,* 7631-86-9